(19)

Europäisches
Patentamt
European
Patent Office
Office européen
des brevets

(11) **EP 3 901 840 A1**

(12) **EUROPEAN PATENT APPLICATION**

(43) Date of publication:
    **27.10.2021 Bulletin 2021/43**

(51) Int Cl.:
    **G06N 20/20** (2019.01)     **G06N 5/00** (2006.01)
    **G06N 3/04** (2006.01)

(21) Application number: **20275079.0**

(22) Date of filing: **24.04.2020**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**
    Designated Validation States:
    **KH MA MD TN**

(71) Applicant: **Cint AB**
    **111 37 Stockholm (SE)**

(72) Inventors:
    • **Herriot, Neil**
      **Stockholm 11137 (SE)**
    • **de Bruijne, Janna**
      **Stockholm 11137 (SE)**
    • **de Jong, Mathijs**
      **Stockholm 11137 (SE)**

(74) Representative: **Kramer, Dani**
    **Mathys & Squire**
    **The Shard**
    **32 London Bridge Street**
    **London SE1 9SG (GB)**

(54) **COMBINED PREDICTION SYSTEM AND METHODS**

(57)    There is provided a system for use with a web-based platform of user-accessible resources, comprising: a first machine learning sub-module configured to provide a first prediction related to a user's interaction with a resource based on at least historic data of user interaction with a plurality of resources; a second machine learning sub-module configured to provide a second prediction related to a user's interaction with a resource based on at least: historic data of user interactions with the resource; and the first prediction; and a processing sub-module configured to calculate a combined prediction related to a user's interaction with a resource.

Figure 4

**Description**

**Field of the Invention**

The present disclosure relates to processing data for prediction purposes. The disclosure is particularly, but not exclusively, applicable to a system and method for obtaining accurate and up to date predictions by combining predictions from two models of varying computational cost to train, thereby outputting accurate predictions without the need to frequently train the computationally more expensive model.

**Background to the Disclosure**

Large training datasets are required in order to train a model that provides accurate predictions for unknown variables. However, using large training datasets results in a high computational cost of training the model, and makes it difficult to frequently re-train the model so as to keep it up to date with the latest training dataset that may exhibit new or different trends than the training dataset last used to train the model.

This is particularly relevant for predictions from recommendation models for resources which may be very different to those in the training dataset used in the latest training of the recommendation model. The recommendation model's prediction in relation to such resource may be highly inaccurate, whilst at the same time it would be impractical to frequently re-train the model as data for a new resource is collected.

Further, even if the model were re-trained, considering the large training dataset used by the model, a large amount of data for the new resource would need to be collected before it would have a significant effect on the model's parameters. As a result, a large amount of data on a new resource may need to be collected before the model "realises" that the new resource performs poorly (e.g. the resource is rarely accessed/completed by users), and could be removed from the overall system.

The present disclosure seeks to at least partially mitigate the problems outlined above.

**Summary of the Disclosure**

Aspects of the disclosure are set out in the accompanying claims.

In an aspect of the present disclosure, there is provided a system for use with a web-based platform of user-accessible resources; comprising (optionally, an evaluation module, wherein the evaluation module comprises): a first ("global") machine learning sub-module configured to provide a first prediction related to a user's interaction with a resource based on at least (optionally, at least a first machine learning model trained using at least) historic data of user interaction with a plurality of resources; a second ("local") machine learning sub-module configured to provide a second prediction related to a user's interaction with a resource based on at least: (optionally, a second machine learning model trained using at least) historic data of user interactions with the resource (i.e. the particular resource to which the first and second predictions relate); and the first prediction; and (optionally) a processing sub-module configured (optionally) to calculate a combined prediction related to a user's interaction with a resource.

By providing two machine learning sub-modules - a "global" and a "local" machine learning sub-module - the prediction produced by the system may be optimised, because actual data is built into system as it is acquired. This may allow the prediction to be optimised given that the amount of historic data for one particular resource (e.g. a survey) changes over time (in particular, new resources will start out with no historic data). Improved prediction may also be provided by evaluating based on data for a particular resource and a global indicator relating to all users and all resources.

The various sub-modules of the system may be implemented in an evaluation module as described herein.

The system is used to produce a prediction related to a user's interaction with a resource, which may in turn be used in assessing multiple resources. As will be appreciated, the second machine learning sub-module is specific to a particular resource (e.g. survey). The second machine learning sub-module is preferably used to predict the errors in the first prediction (produced by the first machine learning sub-module) against what is actually observed. In an alternative, the combined prediction may simply be the second prediction.

The combined prediction related to a user's interaction with a resource is preferably based on at least the first prediction, and the second prediction. Optionally, the combined prediction is further based on probability distribution(s) of deviations from the first prediction and/or between the true and observed user interaction with a resource. Using such probability distributions allows mitigating various issues associated with using a limited dataset, such as excessive reliance on the second (local) prediction if it is unlikely to be accurate (e.g. if little data on the particular resource is available), or the probability that the true user interaction with a resource is different to that observed.

Preferably, the processing sub-module is configured to compare the combined prediction against at least one further combined prediction; the at least one further combined prediction being in relation to a respective at least one further resource. This may allow various resources to be compared against each other.

Preferably, the system further comprises a closure sub-module configured to remove access to a particular resource based at least on the output of the processing sub-module. This may allow poorly-performing resources to be closed, thereby improving use of resources. The system may allow poorly-performing resources to be identified and closed based on a relatively low number of user interactions with the resource (by incorporating 'global' predictions relating to all resources), further improving use of resources. The closure sub-module may operate based on saved prediction data related to a plurality of surveys. A threshold of performance may be used to evaluate predictions and/or determined utility, so that bad resources (e.g. surveys) can be quickly eliminated even with a small sample size. In an alternative, the closure sub-module may direct a further system to close resources and/or may simply flag resources for closure/deletion. The closure sub-module is preferably part of the evaluation module, or it may be a further component (or module).

Preferably, the system further comprises a routing sub-module configured to route the user to a particular resource based at least on the output of the processing sub-module. This may allow the user-resource pair that has the most utility to be made, where the system provides improved pairing. For example, users may be routed to the resource that is most relevant to them, or to the resource at which they are likely to perform best. The routing sub-module is preferably part of the evaluation module, or it may be a further component (or module). In an alternative, the routing sub-module simply recommends the user-resource pair, and a further component performs the actual routing.

Preferably, the processing sub-module is further configured to evaluate the utility of routing a user to a particular resource based at least on the combined prediction and the volume of historic data of user interactions with the resource. This may allow the system to evaluate the value of acquiring new information, in particular for new resources for which little historic data exists, against the utility (value) of sending a user to a resource which is known to be performing well or known to be relevant to a user's interests. In other words, the routing may be based on a balance between the utility of acquiring new information against the utility of sending a user to a resource that is performing well.

Preferably, said evaluation of utility is further based on pre-defined (business) goals for the operation of the system, optionally set by an operator of the system. The goals may be used as weights in the evaluation of utility. Utility may be determined in respect of a plurality of goals (which may be combined).

Preferably, said first prediction is further based on attributes of the resource; and attributes of the user; preferably wherein the attributes of the user comprise a demographic group associated with the user.

Preferably, said first prediction is further based on an expectation (i.e. an expected value) related to a user's interaction with a resource; more preferably wherein said expectation is weighted based on an expected reliability of the expectation; still more preferably wherein said expected reliability is determined by comparing at least one expectation related to a user's interaction with at least one other resource with a observed value (i.e. a result or metric) related to a user's interaction with that at least one other resource. The expectation is optionally provided by the provider of the resource. This may allow for improved prediction, by taking into account an expectation (such an expected performance) related to the resource, but adjusting that expectation based on the credibility and/or biases of the provider of the expectation (optionally by reference to the difference between e.g. actual and expected performance of other resources originating from the same provider, if the provider provides the expected performance).

Preferably, said second prediction is further based on the attributes of the user; more preferably wherein only statistically significant attributes are used. Using only statistically significant attributes avoids (or mitigates) over-fitting when the observations could be a coincidence rather than a trend. As will be appreciated, since the second prediction is already survey-specific, survey attributes are not used.

Preferably, the historic data of user interaction with the resource is weighted based on recency. Only the historic data used with the second (local) prediction is weighted, such that the second prediction accounts for recent changes.

Preferably, the resource relates to (or is) a survey; preferably wherein predictions related to a user's interaction with a resource relate to at least one of: a user's performance on a survey; how long a user will take to complete the survey, how a user will rate the survey, the chance a user will qualify for the survey, the chance that a user will complete the survey, and the chance that a user returns to take more surveys. Predictions related to a user's interaction with a resource may relate to a user performance metric. Different predictions and/or metrics may be combined into a single prediction and/or metric.

Preferably, the system further comprises a first machine learning module configured to train the first machine learning model, and a second machine learning module configured to train the second machine learning model; wherein the second model is re-trained more frequently than the first model. This may allow for the (smaller) second model to account for more up-to-date information than the first model. Preferably, the second (local) model is re-trained/updated continuously, and preferably the first (global) model is re-trained/updated periodically (more preferably monthly).

Preferably, the second model is trained further using the trained first model. This may allow the second trained model effectively to provide an error correction or refinement to the output of the first trained model.

Preferably, the first and second models comprise a plurality of sub-models; preferably wherein the sub-modes comprise decision trees. Each sub-model may be configured to predict the error in the output of the previous sub-model. The sub-models may be trained sequentially. The decision trees may be split based on statistical significance with respect to at least one metric. Leaf nodes of the decision tree may comprise parameters for adjusting to the prediction of the previous sub-model, wherein the parameters are optionally computed via a linear regression algorithm.

Optionally, the system further comprises a web-based platform of user-accessible resources, preferably surveys. The platform may comprise a database storing the resources. Optionally, the system further comprises a router, optionally for routing users to resources. Optionally, the system further comprises means for adjusting the content of, or access to, the user-accessible resources.

In an aspect of the present disclosure, there is provided a method for use with a web-based platform of user-accessible resources (optionally, using an evaluation module), the method comprising: using a first machine learning sub-module, providing a first prediction related to a user's interaction with a resource based on at least (optionally, a first machine learning model trained using at least) historic data of user interaction with a plurality of resources; using a second machine learning sub-module, providing a second prediction related to a user's interaction with a resource based on at least: (optionally, a second machine learning model trained using at least) historic data of user interactions with the resource; and the first prediction; and using a processing sub-module, calculating a combined prediction related to a user's interaction with a resource. It can also be appreciated that the described methods can be implemented, at least in part, using computer program code. According to another aspect of the present disclosure, there is therefore provided computer software or computer program code adapted to carry out these methods described herein when processed by a computer processing means. The computer software or computer program code can be carried by computer readable medium, and in particular a non-transitory computer readable medium. The medium may be a physical storage medium such as a Read Only Memory (ROM) chip. Alternatively, it may be a disk such as a Digital Video Disk (DVD-ROM) or Compact Disk (CD-ROM). It could also be a signal such as an electronic signal over wires, an optical signal or a radio signal such as to a satellite or the like. The disclosure also extends to a processor running the software or code, e.g. a computer configured to carry out the methods described above.

Each of the aspects above may comprise any one or more features mentioned in respect of the other aspects above.

Use of the words "apparatus", "server", "device", "processor", "communication interface" and so on are intended to be general rather than specific. Whilst these features of the disclosure may be implemented using an individual component, such as a computer or a central processing unit (CPU), they can equally well be implemented using other suitable components or a combination of components. For example, they could be implemented using a hard-wired circuit or circuits, e.g. an integrated circuit, using embedded software, and/or software module(s) including a function, API interface, or SDK. Further, they may be more than just a singular component. For example, a server may not only include a single hardware device but also include a system of microservices or a serverless architecture. Either of which are configured to operate in the same or similar way as the singular server is described.

It should be noted that the term "comprising" as used in this document means "consisting at least in part of". So, when interpreting statements in this document that include the term "comprising", features other than that or those prefaced by the term may also be present. Related terms such as "comprise" and "comprises" are to be interpreted in the same manner. As used herein, "(s)" following a noun means the plural and/or singular forms of the noun.

The invention extends to methods and/or apparatus substantially as herein described and/or as illustrated in the accompanying drawings.

The invention extends to any novel aspects or features described and/or illustrated herein. In addition, device aspects may be applied to method aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

As used herein, means plus function features may be expressed alternatively in terms of their corresponding structure, such as a suitably programmed processor and associated memory, for example.

As used herein, the term "resource" preferably connotes a web resource.

As used herein, the term "survey" preferably connotes a web-based survey, which a user may complete (often in exchange for payment). A survey is a type of resource.

As used herein, the term "complete" as used in the context of a survey preferably connotes a user finishing a survey, preferably by answering all questions in the survey; and/or answering enough questions so as to provide useful data (which may be assessed via a predetermined threshold, for example).

Preferred examples are now described, by way of example only, with reference to the accompanying drawings.

**Brief Description of the Drawings**

Figure 1 is a schematic diagram of a communication network according to an example of the disclosure;

Figure 2 is a schematic diagram of a user device operating in the communication network;
Figure 3 is a schematic diagram of a web server operating in the communication network;
Figure 4 is a schematic diagram of an example system used for predicting and analysing user(s) performance on survey(s);
Figures 5a and 5b show an example database schema;
Figure 6 is a schematic diagram of a further example system used for predicting and analysing user(s) performance on survey(s);
Figure 7 shows an example overview of the functionality of the example systems described with reference to Figures 1 to 6;
Figure 8 is a flow diagram illustrating a method of predicting performance and utility of a user and survey combination;
Figure 9a is a flow diagram illustrating an example method of determining a global prediction of user performance on a survey;
Figure 9b is a flow diagram illustrating an example method of determining a local prediction of user performance on a survey;
Figure 10 is a flow diagram illustrating an example method of determining a combined prediction of user performance on a survey;
Figure 11 is a flow diagram illustrating an example method of determining a utility of sending a user to a survey;
Figure 12 is a schematic diagram of an example system used for determining a utility of sending a user to a survey; and
Figure 13 is a flow diagram illustrating an example implementation of the method of Figure 8 for a new survey.

## Detailed Description of Preferred Examples

The present disclosure is described with particular reference to users and resources such as surveys, which serve as example entities to be matched by the described recommendation system. The system may be particularly well suited to matching users with new (or untested) surveys that would be a good fit (e.g. surveys the user is likely to qualify for, and/or likely to enjoy enough that they will complete the survey). This can be difficult, as each new survey is in many ways unique and data related to other surveys (even with similar attributes) may not serve as an entirely accurate indicator for the new survey.

The present system may also work well for matching users with previously tested surveys, and the described system frequently (preferably continuously) refines its predictive models such that it can account for changing trends in a particular user and survey combination (e.g. a survey that users in a particular age group used to typically complete, but no longer do).

Further, the present disclosure could equally well be applied to any other recommendation system. For example, it could be applied to matching users with resources other than surveys such as articles, videos, or advertisements. The present disclosure works particularly well for matching a user with a resource in cases when only a small sample size of similar users for the resource is available, while large sample sizes for other similar resources are available, wherein the data patterns (or performance) of the similar resources may not in practice be the same as that of the resource of interest. By combining a prediction based on data from a plurality with resources with a prediction based on data from the resource of interest, the present system is able to serve as an accurate prediction of the resource's of interest performance with a user.

The matching of users and surveys as herein discussed is quantified using user performance on a survey (e.g. the probability a user completes a survey, or the probability a user returns to complete more surveys after completing a survey) which is interchangeable with survey performance with a user, and/or the utility of sending a user to a survey (e.g. a relative monetary benefit to the survey provider and/or the provider of the described system of a survey being sent to a user). The utility may further include an information pricing aspect, whereby the utility of sending a user to a survey is affected by the utility (information "profit") of testing the particular user and survey combination.

### Hardware architecture

According to an example, surveys are provided to a user via a web application that runs in a web browser on the user (client) device. A person skilled in the art would appreciate that the surveys may be provided to a user in a range of other ways, such as via a standalone application downloaded onto the user device, without departure from the scope of the claims.

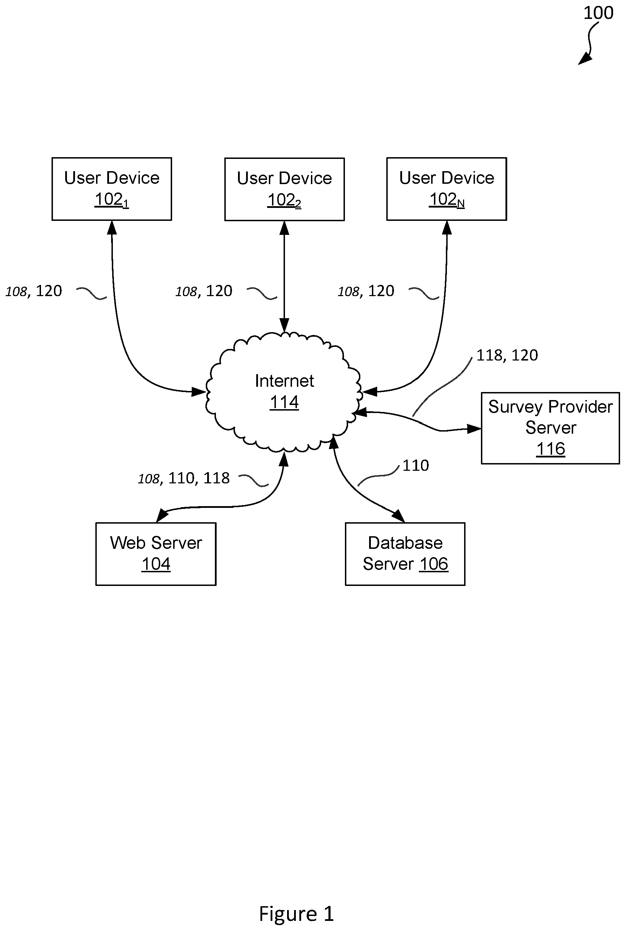

Referring to Figure 1, according to an example, in a communication network 100 user devices $102_1$, $102_2$, $102_N$ are configured to communicate with a survey provider server 116. In particular, the user devices $102_1$, $102_2$, $102_N$ are configured to request survey(s) from the survey provider server 116 and submit the user's answers to the survey(s) to the survey provider server 116. In the present example, these requests and submissions are transmitted via connections 120 established via the Internet 114. The survey provider server 116 further collects data related to users and surveys, including data related to a user's performance on a survey - e.g. how long the survey/study took to complete, or how well the user rated the survey. Also presented in the communication network 100 is a web server 104 which is configured to receive/provide data (e.g. data related to the users, surveys and the users' performances on surveys) from/to the survey provider server 116 via connections 118 established via the Internet 114. Alternatively, the user devices $102_1$, $102_2$, $102_N$ are configured to request survey(s) from the web server 104 via connections 108 established via the Internet 114, which the web server 104 in turn requests and receives from the survey provider server 116 via connections 118. In this alternative, the user's answers to the survey(s) are submitted directly to the web server 104 via connections 108 (and the user and survey data is collected directly by the web server 104), and the web server 104 may provide some or all of this data to the survey provider server 116 via connections 118. Also presented in the communication network 100 is a database server 106 which is configured to establish connections 110 to the web server 104 via the Internet 114. Alternatively, the database server 106 and the web server 104 are connected via a local connection, such as via a Local Area Network (LAN) connection.

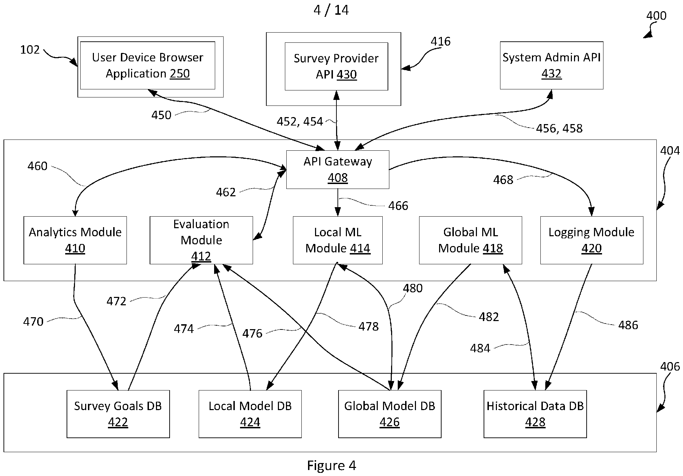

One or more web services are running on the web server 104 (these services are described with reference to Figure 4), and it is these service(s) that the survey provider server 116 communicates with.

In the present example, the user device 102, web server 104, survey provider server 116, and database server 106, are arranged to communicate with the Internet 114 via wired Ethernet connections 108, 110, 118. The user device 102, web server 104, social media network server 116, and database server 106, are also configured to connect with the Internet 114 via access points (not shown). An Ethernet connection connects to an access point (e.g. in the form of a broadband modem or the like), and thence on to the Internet 114.

In the present example, there is no direct connection established between a user device 102 and a database server 106, nor between a user device and a web server 104. Instead, separate connections are established between a user device 102 and a survey provider server 116 (connections 120), between a survey provider server 116 and a web server 104 (connections 118), and between a web server 104 and a database server 106 (connections 110). Optionally, the user devices are configured to access the database server 106 or web server 104 directly.

In the present example, the database server 106 is a relational database management system in the form of a client-server database engine. For example, the database server 106 is a PostgreSQL server. The database server 106 is shown here as connectable only via the Internet 114. Optionally, the database server 106 is hosted in the same internal network as the web server 104 or the same physical device as the web server 104. Alternatively, the database server 106 is not a client-server database engine but rather a software library such as SQLite and runs on the same system as the web server 104.

The database server 106 stores a range of information that may be requested by the web server 104. For example, the database server stores historical data relating to users' performance on various surveys. Further, the web server 104 transmits data to the database server 106 for storage on the database server 106. For example, the web server 104 receives data relating to a given user's performance on a given survey and from the survey provider server 116 (as described above) and transmits this data to the database server 106 for storage.

In the present example, the database server 106 comprises a number of separate databases (which are described with reference to Figure 4).

In an alternative example, two or more of the databases 422, 424, 426, 428 described with reference to Figure 4 are combined into a single database (i.e. the data stored in two or more databases is instead stored in a single database), or the data stored on databases 422, 424, 426, 428 is stored in yet more databases.

In a further alternative example, each database (e.g. databases 422, 424, 426, 428) resides on a separate database server or separate group of database servers.

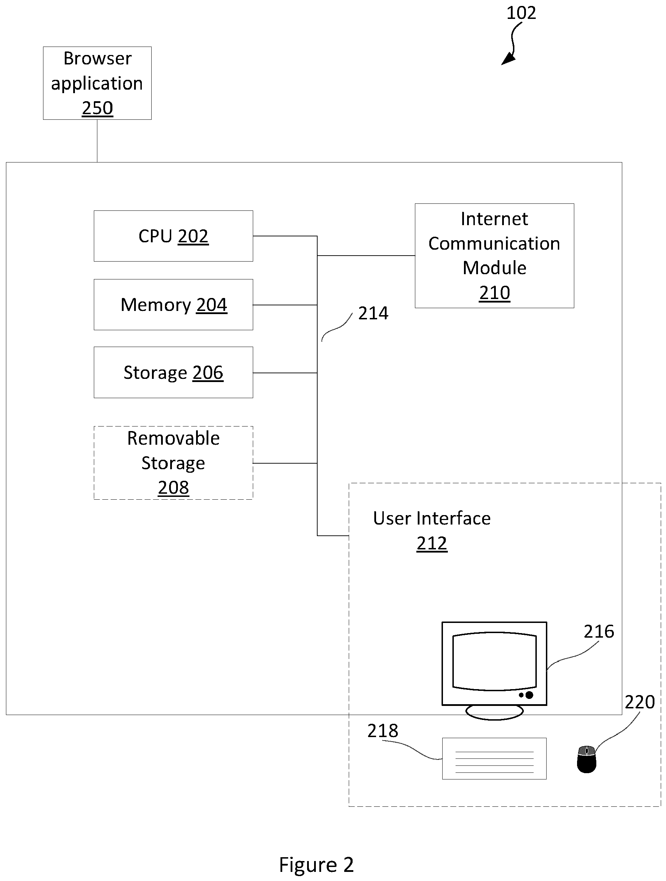

Referring to Figure 2, a user device 102 is a computer device which comprises a Central Processing Unit (CPU) 202, memory 204, storage 206, removable storage 208, Internet communication module 210 and a user interface 212 coupled to one another by a bus 214.

The user interface 212 comprises a display 216 and an input/output device which in this example is a keyboard 218 and a mouse 220. In other examples, the input/output device comprises a touchscreen such as a Thin-Film-Transistor (TFT) Liquid Crystal Display (LCD) display or an Organic Light Emitting Diode (OLED) display, or other appropriate display. The user interface is arranged to provide indications to the user, under the control of the CPU 202, and to receive inputs from the user, and to convey these inputs to the CPU 202 via the communications bus 214.

The CPU 202 is a computer processor, e.g. a microprocessor. It is arranged to execute instructions in the form of computer executable code, including instructions stored in the memory 204, the storage 206 and/or removable storage 208. The instructions executed by the CPU 202 include instructions for coordinating operation of the other components of the user device 102, such as instructions for controlling the communication module 210 as well as other features of a user device 102 such as a user interface 212 and audio system (not shown). A browser application 250 may be installed on the user device 102. The browser application 250 has associated instructions that are also in the form of computer executable code, stored in the memory 204, the storage 206 and/or removable storage 208. The browser application 250 also has instructions for operating, receiving, and/or sending data via the communication module 210.

The browser application 250 is a software application that can be used for accessing information on the Internet 114. In the present example, the browser application 250 is Google® Chrome®. However, any other browser application would be a suitable alternative, such as Mozilla® Firefox®, Safari® or Internet Explorer®.

The memory 204 stores instructions and other information for use by the CPU 202. The memory 204 is the main memory of the user device 102. It usually comprises both Random Access Memory (RAM) and Read Only Memory (ROM). The memory 204 is arranged to store the instructions processed by the CPU 202, in the form of computer executable code. Typically, only selected elements of the computer executable code are stored by the memory 204 at any one time, which selected elements define the instructions essential to the operations of the user device 102 being carried out at the particular time. In other words, the computer executable code is stored transiently in the memory 204 whilst some particular process is handled by the CPU 202.

The storage 206 provides mass storage for the user device 102. In different implementations, the storage 206 is an integral storage device in the form of a hard disk device, a flash memory or some other similar solid state memory device, or an array of such devices. The storage 206 stores computer executable code defining the instructions processed by the CPU 202. The storage 206 stores the computer executable code permanently or semi-permanently, e.g. until overwritten. That is, the computer executable code is stored in the storage 206 non-transiently. Typically, the computer executable code stored by the storage 206 relates to instructions fundamental to the operation of the CPU 202, Internet communication module 210, user interface 212 and other installed applications or software modules (such as the browser application 250).

The removable storage 208 provides auxiliary storage for the user device 102. In different implementations, the removable storage 208 is a storage medium for a removable storage device, such as an optical disk, for example a Digital Versatile Disk (DVD), a portable flash drive or some other similar portable solid state memory device, or an array of such devices. In other examples, the removable storage 208 is remote from the user device 102, and comprises a network storage device or a cloud-based storage device.

The Internet communications module 210 is configured to establish the connection(s) 108 with web server 104 shown in the communication network 100. The Internet communications module 210 typically comprises an Ethernet network adaptor coupling the bus 214 to an Ethernet socket. The Ethernet socket is coupled to a network.

As mentioned, the surveys are provided to users via user-based software which is implemented as a computer program product, which is stored, at different stages, in the memory 204, storage device 206, and/or removable storage 208. The storage of the computer program product is non-transitory, except when instructions included in the computer program product are being executed by the CPU 202, in which case the instructions are sometimes stored temporarily in the CPU 202, or memory 204. It should also be noted that the removable storage 208 is removable from the user device 102, such that the computer program product may be held separately from the user device 102 from time to time.

In the present example, the user device 102 is a personal computer such as a laptop computer or desktop running any other type of operating system such as MacOS®, Linux® or Windows®. In such an example, the Ethernet connection is effectively similar to the other wireless connection 108, in that it connects, albeit via a fixed line or wired connection rather than a wireless one, to an access point or router (not shown), e.g. in the form of a broadband modem or the like, and thence on to the Internet 104.

In an alternative example, the user device 102 is a smartphone. For example, the user device may be a smartphone whose operating system is an Apple® iPhone® OS (iOS), Android®, or Microsoft® Windows® 10 operating system. The operating system manages the basic functioning of the hardware of the user device 102 and operational interactions between the hardware components of the user device 102 and software module 250.

In an alternative example, the user device 102 is arranged to communicate with the Internet 114 via a cellular radio network link using an appropriate communication standard, such as Global System for Mobile Communications (GSM), Universal Mobile Telecommunications System (UMTS) or Long-Term Evolution (LTE), to provide data communication. Similarly to the Ethernet connection 120, 110, in cellular radio network link, the user device is configured to connect with the Internet 114 via an access point (not shown). The personal computing device 102 is arranged to communicate with the access point via another short-range wireless communication connection. This other short-range wireless communication connection can be any one of: a W-Fi® connection, a Bluetooth® connection, IR wireless connection, ZigBee® connection, or some other similar connection.

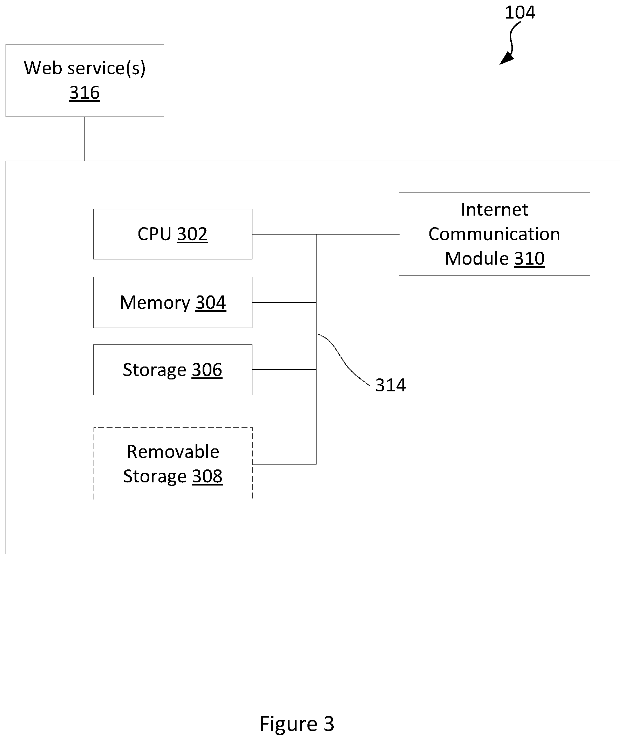

Referring to Figure 3, a web server 104 comprises a Central Processing Unit (CPU) 302, memory 304, storage 306, removable storage 308, and an Internet communication module 310 coupled to one another by a bus 314. Also shown are web service(s) 316 running on the web server 104. The web service(s) 316 would typically be implemented as one or more web services with different or overlapping functions as required for determining a combined prediction of a user's performance on a survey and/or for any other required purposes (e.g. data analytics of data stored on database server 106). In the present example, a microservice software architecture is implemented for the web server 104 (as described in further detail with reference to Figure 4), and only one web service (API Gateway 408) establishes a connection 118 with the survey provider server 116 via the Internet 114, whereas the remaining web service(s) (if any) establish connections with the API gateway 408, directly or indirectly (via other web services). In an alternative, each of the one or more web services on the web server 104 establish a separate communication 118 with the survey server device 116 via the Internet 114.

The modules shown in Figure 3 with the same name as those described with reference to Figure 2 function in substantially the same way. Since the web server 104 may perform various computationally intensive tasks (e.g. training of machine learning models), it optionally comprises further specialised hardware such as Graphical Processing Unit(s) or field-programmable gate arrays (FPGA) (not shown).

In the present example, the survey provider server 116 is made up of a number of separate computers into a cloud offering. The server 116 runs web service(s) that make up a survey server instance 416 which includes a survey API 430, and which can be connected to via the Internet 114.

In an alternative example, the survey provider server 116 is a single computer as described above with reference to Figure 3.

*Software architecture*

Referring to Figure 4, example software architecture 400 of the system used for predicting and analysing user(s) performance on survey(s) is shown. The system comprises web service(s) 404 running on the web server 104, and database(s) 406 running on the database server 106. Concurrently, web service(s) 404 run on the survey provider server 116. Web service(s) 416 include a survey provider API 430. In addition, a browser application 250 may run on the user device 102, and a number of further external applications may run on other devices/servers (e.g. system administrator (admin) API 432 running on a web server used by the system's administrators (not shown)).

The web services 404 manage interaction with external applications, and in particular with the survey provider API 430. The web services 404 comprise: an analytics module 410, an evaluation module 412, a global (first) machine learning (ML) module 418, a local (second) machine learning module 414, and optionally a logging module 420.

In the present example, a microservices software architecture is implemented on the web server 104. Accordingly, the web services 404 comprise an API gateway 408, and each of: the analytics module 410, the evaluation module 412, the global machine learning module 418, the local machine learning module 414, the logging module 420, and the API gateway 408 corresponds to a separate web service 316 on the web server 104. Each (micro)service/module implements a set of distinct features or functionality (e.g. the global ML module trains a global (first) ML model), and each functional area of the web services 404 is implemented by one corresponding microservice. The microservices expose and/or consume application programming interfaces (APIs) to/from each other (e.g. the logging module 420 exposes an API to the API gateway 408) and/or to/from external applications (e.g. the API gateway 408 exposes an API to the survey provider API 430). Preferably, communication with external applications passes only via the API gateway 408, which acts as an intermediary for communication between external applications and backend services - e.g. modules 410, 412, 414, 418, 420. Thus, all requests (e.g. HTTP requests) from external applications first pass through the API gateway 408, and it is the API gateway 408 that is responsible for request routing, composition, and protocol translation (e.g. between web protocols (HTTP or WebSocket) and internal, possibly web-unfriendly, protocols) in order to route the requests to the appropriate microservice(s). Typically, in order to process a request, the API gateway will consume APIs of multiple microservices, aggregate the result, and return the aggregated result. Further, the API gateway 408 may provide external application(s) with simplified/custom APIs. For example, only a single request to the API gateway 408 may be required to obtain a prediction of a user's performance on a survey based on input user and survey attributes - the API gateway 408 will invoke the required microservices internally and return the aggregated result (prediction of user performance). The API gateway 408 may additionally be responsible for tasks such as authentication, authorization, caching, monitoring, load balancing, access control, API metering, request shaping and management, and static response handling.

In the present example, the API gateway 408 manages communication with external applications - in particular, with the survey provider API 430. The API gateway 408 establishes connection(s) with endpoint(s) of the external applications. It can subsequently receive and respond to requests and/or receive data from the external applications. Example communications between the API gateway 408 and external applications include:

- User and survey data including data relating to the performance of user(s) on survey(s) and user and/or survey attributes is transmitted 452 from the survey provider API 430 and/or transmitted 450 directly from user devices 102 (e.g. via a browser application 250 on the user device 102) to the API gateway 408;
- Survey provider API 430 requests 454 a prediction of a user's (e.g. user A) performance on a survey (e.g. survey X) from the API gateway 408 (and a corresponding response from the API gateway);
- System admin API 432 on a system administrator server requests 456 analytics data on survey(s) and/or user(s) (and a corresponding response from the API gateway);
- System admin API 432 on a system administrator server transmits 458 data for storage on database server via API gateway 408.

The functionality of the components (services / modules / databases) will now be described in further detail with reference to the above example communications.

The global (first) machine learning (ML) module 418 trains a global (first) machine learning model for predicting a user's performance on a survey from input user and survey data (e.g. user and survey attributes). The global model is trained using historic data of user performance on a plurality of surveys, which module 418 request and receives 484 from the historical data DB 428. Once trained, the global model is transmitted 482 to the global model DB 426 for storage. The global model is preferably updated (or re-trained) periodically (e.g. every 6h, daily, weekly, monthly), and more preferably monthly. Re-training the global model is a computationally intensive task, and re-training may take up to several days to complete. Accordingly, re-training is done on a less frequent, periodical basis in order to reduce computational costs of the entire system. Alternatively, the global model is re-trained continuously in an asynchronous manner. The inner workings of module 418 are described in further detail in sections below.

Similarly, the local (second) machine learning (ML) module 414 trains a local (second) machine learning model for predicting a user's performance on a particular survey from input user data (e.g. user attributes). The local model is trained using (preferably recent) historic data of user performance on the particular survey, which local ML module 414 requests and receives 466 from the API gateway 408, which in turn receives 452 it from the survey provider API 430, and using a trained global model which is queried 480 from the global model DB 426. Once trained, the local model is transmitted 478 to the local model DB 424 for storage. The local model is preferably updated (or re-trained) continuously, in order to provide a most up-to-date prediction of a user's performance on a particular survey based on the latest recent historic data of user performance on the particular survey (which may change over time). The dataset (recent historical data) used to train the local model is accordingly preferably much smaller than that used by the global ML module 418, so that continuous updating of the local model is feasible without the need for excessive computational resources. Using a smaller training dataset for the local ML module 414 (than that for the global ML module 418), which spans a shorter time period (only "recent" data is used) and is limited to a single survey, may greatly reduce the training time and cost. The "recentness" of historical data for use in the local ML module 414 can be assessed in a number of ways - for example, by timestamp (e.g. data from the last 5 minutes, 1 day, week, or month), or by result count (e.g. 1000 latest user attributes - user performance pairs for the particular survey). Preferably, the most recent 1 week or 1 month of historical data is used for the training of the local ML model by the local ML module 414. The update of the local model preferably runs in an asynchronous manner, and is typically much faster (taking less than 10 seconds) than the global model update. Alternatively, the local model is re-trained periodically. The inner workings of module 414 are described in further detail in sections below.

The logging module 420 is optionally a separate web service that manages the logging/storage of data on users' performance across a plurality of surveys (the "historical" data). When the API gateway 408 receives 450, 452 user and survey data, this data is stored in the historical data DB 428 via the logging module 420 - the data is transmitted 468 to the logging module 420 which (optionally) processes it and then transmits 486 it for storage in the historical data DB 428. Alternatively, the API gateway 408 transmits the user and survey data directly to the historical data DB 428 (communication not shown), and a logging module 420 is not present.

The evaluation module 412 determines the utility (or value) of user and survey combination(s) (or of sending user(s) to survey(s)), in particular utility for the survey provider. Module 412 determines: predictions of user performance on surveys, the utility (value) of sending user(s) to a survey, and/or matches a user with one of a plurality of surveys that would be a good fit (e.g. a survey the user is likely to qualify for, and likely to enjoy enough they'll complete it). Further, the evaluation module 412 includes a component that prices the information utility (value) of gathering information on surveys such that the system can trade off sending users to surveys that are known to be "good" (e.g. with high user performance metrics) versus sending users to new surveys to find out if those surveys will perform better than expectations. The inner workings of module 412 are described in further detail in sections below.

An example function of the evaluation module 412 is to determine a combined prediction of a particular user's performance on a particular survey using: the global model queried 476 from the global model DB 426, and the local model queried 474 from the local model DB 424. User performance is quantified via one or more (user performance) metrics - see example metrics in Table 1. Upon a request 454 from the survey provider API 430 to the API gateway, the API gateway 408 requests 462 the prediction of user performance from the evaluation module 412. Preferably, the combined prediction of a particular user's performance on a particular survey determined by the evaluation engine 412 is also determined using the survey provider's estimate of the particular survey's performance - in particular, the survey's average expected performance with all users or a group of users (e.g. users in the age group 16 to 25) that includes the particular user, which is transmitted (along with request 454 or separately) from the survey provider API 430 to the evaluation module 412 via the API gateway 408. The survey provider's estimate is typically available only for a subset of the user performance metrics - e.g. for the fraction (probability) of users who take the survey and will complete it, and the average time it will take users to complete the survey. The credibility of the survey provider's estimates is preferably modelled by the evaluation engine 420. The survey provider's estimates are optionally stored (e.g. for future re-use and/or analytics) on the database server 106 (e.g. in the historical data DB 428), for example by the logging module 420 (which receives them from the API gateway 408). If the survey provider's estimate of user/survey performance is the same for all users that take the survey, this estimate may alternatively be transmitted to the evaluation module 412 as a feature of the global and/or local model, or as one of the survey attributes.

The determination of the utility of a user and survey combination by the evaluation module 412 is preferably further based on pre-defined survey goals queried 472 from the survey goals DB 422. The survey goals represent the objective that a particular survey or group of surveys is trying to achieve for the survey provide - e.g. business goals such as revenue profits increase, user retention, and/or client satisfaction. Incorporating these survey goals into the determination of the utility of a user and user combination may allow a more flexible and/or customised approach to matching users to surveys in a way that serves one or more of those goals.

The various functions of the evaluation module 412 are optionally performed by dedicated sub-modules (not shown) within the evaluation module 412. For example, the evaluation module 412 may comprise: a first machine learning sub-module used to obtain a first (global) predication of user performance on a survey; a second machine learning sub-module used to obtain a second (local) predication of user performance on a survey; a processing sub-module used to determine a combined prediction of user performance on a survey, or the utility of sending (routing) a user to a survey, or to compare combined predictions of user performance on multiple surveys. Further sub-modules within the evaluation module 412 may include: a closure sub-module used to remove a particular survey (or removing access to the survey) based on the output of the processing sub-module; and/or a routing sub-module used to route a user to a particular survey (or to no surveys) based on the output of the processing sub-module.

The analytics module 410 manages analytics on data stored on the database server 106. For example, the analytics module 410 runs data analytics on the performance of a particular survey across all or a subset (e.g. demographic subset) of users who took that survey. Upon a request 456 from the system admin API 432 (or from the survey provider API 430 - not shown) to the API gateway 408, the API gateway 408 requests 460 analytics data from the analytics module 410. Moreover, the analytics module manages and updates model(s) of the credibility of the survey providers' estimates of user performance on surveys. Further, the analytics module 410 updates 470 the survey goals data stored in the survey goals DB 422. For example, the survey goals for a survey or a plurality of surveys are updated to prioritise assessment of new surveys, maximise revenue, or a balance of the two. More generally, the system administrator (admin) sets the surveys goals based on motivations and goals of the system and admin, as well as other stakeholders such as users, or survey providers. Although Figure 4 shows specific (uni- or bi-directional, or not existent) communications/connections between modules / applications / APIs / databases, it should be appreciated that these are purely exemplary. For example, rather than querying the global model database 426 to obtain a global model, the evaluation module 412 could request this global model from the global machine learning module 418 (optionally via the API gateway 408) which would in turn query the global model from the global model DB 426. Or, for example, the recent historical data used by the local ML module 414 could be queried from the historical data DB 428 or a further database (e.g. recent historical data DB - not shown) rather than obtained from the API gateway 408. Further, a number of communications/connections are not shown in Figure 4 to make it more legible - e.g. the API gateway 408 may also query the historical data DB 428 and transmit the results to the analytics module 410.

It should also be appreciated that each API described above may in fact comprise a number of APIs with differing or overlapping functionality.

Likewise, it should be appreciated that any of the functions described above could be performed on the web server 104 or the database server 106, and that the specific division of functions described above is purely an example.

Further, it should be noted that a number of simpler functions of the system are not described above (e.g. authorisation of external requests). Such functions are not the focus of this disclosure, and a person skilled in the art could implement them using any conventional teaching.

In an alternative example, the functions described above with reference to any one or more of: the analytics module 410, the evaluation module 412, the global machine learning module 418, the local machine learning module 414, and the logging module 420 are instead performed on the database server 106, and/or the functions described above with reference to any one or more of: the survey goals DB 422, the local model DB 424, global model DB 426, and historical data DB are instead performed on the web server 104.

In another alternative example, a monolith software architecture is implemented on the web server 104, the API Gateway 408 is not present, and/or the functionalities of two or more of the modules 410, 412, 414, 418, 420 described with reference to Figure 4 are encapsulated within a single web service 316, or the functionalities are split into yet more web services.

In a further alternative example, the API gateway 408 resides on a separate server (an API gateway server - not shown), and optionally so do one or more of the other modules 410, 412, 414, 418, 420 (in particular the global ML module 418). In this alternative, an additional server acts as an intermediary between the API gateway and external applications (e.g. user device browser application 250, survey provider API 430, or any "other external application" 432).

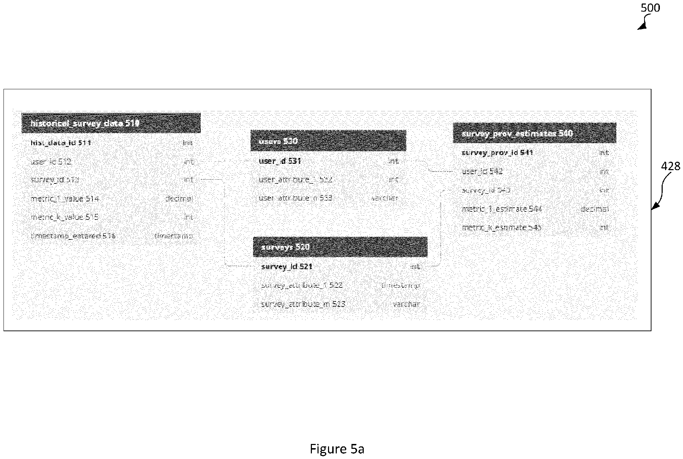

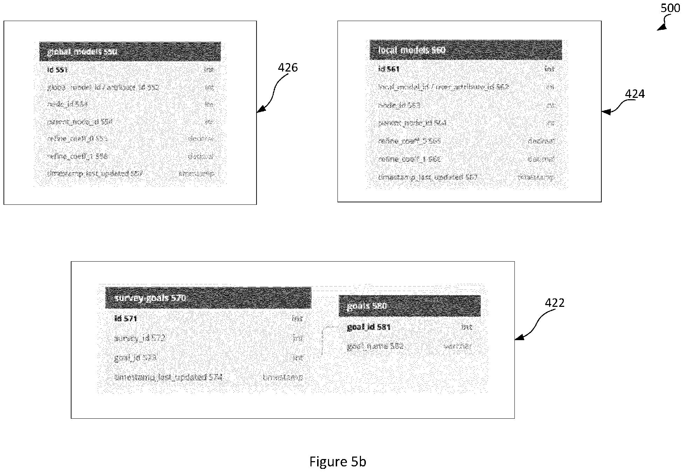

The overall functions of databases 406 in the present example have been described above. The databases store many different aspects around the users, surveys, and the various models used. The manner in which this data is stored on and accessed from these databases is described in further sections below. Referring to Figures 5a and 5b, example database schemas 500 are shown. These example schemas are for illustrative purposes, a person skilled in the art will appreciate that additional tables, columns or other data may be stored in each database. The historical data DB 428 comprises a number of tables: historical_survey_data table 510, surveys table 520, users table 530. The survey goals DB 422 comprises: survey-goals table 570 and goals table 580. The global model DB 426 comprises a global_models table 550, and the local model DB 424 comprises a local_models table 560.

Each table comprises a number of columns - for example, the historical_survey_data table 510 comprises columns: hist_data_id 511, user_id 512, survey_id 513, metric_1_value 514, metric_k_value 515, and timestamp_entered 516. Within the various tables shown in figures 5a and 5b, columns such as columns metric_1_value 514 and metric_k_value 515 represent a number of metric_value columns (precisely k such columns). Accordingly, the database schemas 500 assume that there are: k metrics (user performance metrics), n user attributes, and m survey attributes.

Tables 550 and 560 comprise columns corresponding to the below described exemplary machine learning models used - sets of decision trees for each (user and/or survey) attribute, whose (leaf) nodes (identified via columns node_id 553, 563) correspond to linear refinement parameters (see e.g. columns refine_coeff_0 555 or refine_coeff_1 556) used to refine a prediction of user performance. A number of foreign key references are denoted in Figures 5a and 5b - e.g. the user_id 512 and survey_id 513 columns in the historical_survey_data table 510 are foreign key references (in the form of integers) to the user_id 531 column in users table 530 and the survey_id 521 column in surveys table 520 respectively. With these foreign key relationships established, the relational nature of the data can be taken advantage of. For example, the m survey attributes for a given historical data record (given hist_data_id 511) can be promptly fetched from the surveys table 520 based on the survey_id 512 without the need to repeat the survey attributes for each historical data record and so saving storage costs.

Querying the tables in database schemas 500 would be a routine task for a person skilled in the art, and so is not described in further detail.

Example code to generate this database scheme on a PostgreSQL is presented below:

```
CREATE TABLE "historical_survey_data 510" (
  "hist_data_id 511" SERIAL PRIMARY KEY,
  "user_id 512" int,
  "survey_id 513" int,
  "metric_1_value 514" decimal,
  "metric_k_value 515" int,
  "timestamp_entered 516" timestamp
);
CREATE TABLE "surveys 520" (
  "survey_id 521" SERIAL PRIMARY KEY,
  "survey_attribute_1 522" timestamp,
  "survey_attribute_m 523" varchar
```

```
    );
    CREATE TABLE "users 530" (
      "user_id 531" SERIAL PRIMARY KEY,
      "user_attribute_1 532" int,
      "user_attribute_n 533" varchar
    );
    CREATE TABLE "survey_prov_estimates 540" (
      "survey_prov_id 541" SERIAL PRIMARY KEY,
      "user_id 542" int,
      "survey_id 543" int,
      "metric_1_estimate 544" decimal,
      "metric_k_estimate 545" int
    );
    CREATE TABLE "survey-goals 570" (
      "id 571" SERIAL PRIMARY KEY,
      "survey_id 572" int,
      "goal_id 573" int,
      "timestamp_last_updated 574" timestamp
    );
    CREATE TABLE "goals 580" (
      "goal_id 581" SERIAL PRIMARY KEY,
      "goal_name 582" varchar
    );
    CREATE TABLE "global_models 550" (
      "id 551" int PRIMARY KEY,
      "global_model_id / attribute_id 552" int,
      "node_id 553" int,
      "parent_node_id 554" int,
      "refine_coeff_0 555" decimal,
      "refine_coeff_1 556" decimal,
      "timestamp_last_updated 557" timestamp
    );
    CREATE TABLE "local_models 560" (
      "id 561" int PRIMARY KEY,
      "local_model_id / user_attribute_id 562" int,
      "node_id 563" int,
      "parent_node_id 564" int,
```

```
        "refine_coeff_0 565" decimal,

        "refine_coeff_1 566" decimal,

        "timestamp_last_updated 567" timestamp

    );

    ALTER   TABLE   "historical_survey_data   510"   ADD   CONSTRAINT   "users"
FOREIGN KEY ("survey_id 513") REFERENCES "surveys 520" ("survey_id 521");

    ALTER   TABLE   "historical_survey_data   510"   ADD   CONSTRAINT   "surveys"
FOREIGN KEY ("user_id 512") REFERENCES "users 530" ("user_id 531");

    ALTER   TABLE   "survey_prov_estimates   540"   ADD   CONSTRAINT   "users"
FOREIGN KEY ("survey_id 543") REFERENCES "surveys 520" ("survey_id 521");

    ALTER   TABLE   "survey_prov_estimates   540"   ADD   CONSTRAINT   "surveys"
FOREIGN KEY ("user_id 542") REFERENCES "users 530" ("user_id 531");

    ALTER   TABLE   "survey-goals   570"   ADD   CONSTRAINT   "goals"   FOREIGN   KEY
("goal_id  573")  REFERENCES  "goals  580"  ("goal_id  581");
```

In an alternative example, a NoSQL database is used.

Example user attributes, survey attributes, and (user performance) metrics are listed in Table 1 below. Preferably, the user attributes correspond to anonymous data, an do not include data that would enable the identification of a specific person, so that the system can more easily adhere to various strict data protection regulations (such as the General Data Protection Regulation (GDPR) in the European Union).

**Table 1**

| Property | Examples |
|---|---|
| User A attributes | age; age group; profession; nationality; country of residence; education level; number of previously completed surveys (e.g. within a specific group of surveys); average rating of surveys by user A |
| Survey X attributes | length (number of questions); length (word or character count); topic; sub-topic; type of questions (e.g. multiple choice or free-text); survey provider (e.g. survey provider id in table survey providers on survey goals DB 428 (not shown)); average survey X rating, survey provider estimate of user A performance on survey X |
| User A performance | Time for user A to complete survey X; user A rating of survey X |
| metrics on survey X | (e.g. a score between 1 and 5); probability user A will qualify for survey X (prequalification rate); probability user A completes survey X (completion rate); probability user A returns to complete more surveys after completing survey X (user repeat rate) |

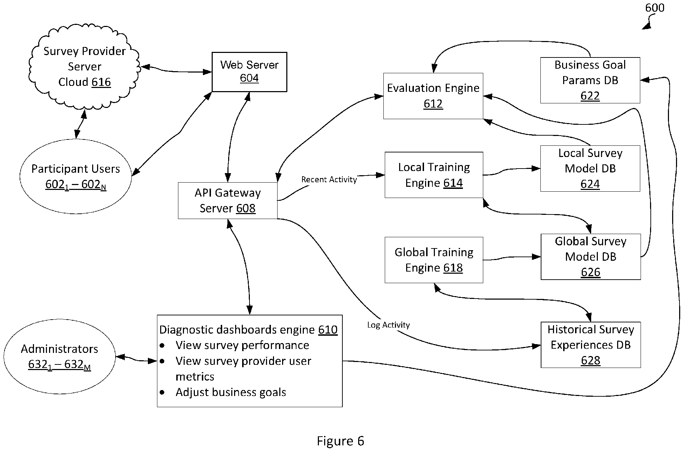

Referring to Figure 6, a further example hardware architecture 600 of the system used for predicting and analysing user(s) performance on survey(s) is shown. The architecture 600 in this further example is identical to the software and hardware architecture example described with reference to Figures 1 to 5b, except where explained below, and corresponding reference numerals are used to refer to similar features. For example, the evaluation engine 612 functions in the same way as the evaluation module 412 described with reference to Figure 4, the participant users $602_1$ to $602_N$ correspond to user devices $102_1$ to $102_N$, or the administrators $632_1$ to $632_M$ correspond to the system admin server (comprising the system admin API 432).

In this example, the API gateway runs on a separate server (the API gateway server 608) to the web server 604, and the web server 604 acts as a further intermediary for communications between the API gateway server 608 and external applications (e.g. the survey provider server 616 (which in this example is cloud-based)). Further, a logging engine/module is not present, and the API gateway server 608 logs (or stores) activity ("historical" data) on the historical survey experiences (historical data) DB 628 directly. Moreover, the administrators $632_1$ to $632_M$ communicate directly with the diagnostic dashboards engine 610, and each engine 610, 612, 614, 618 and database 622, 624, 626, 628 runs on a separate server.

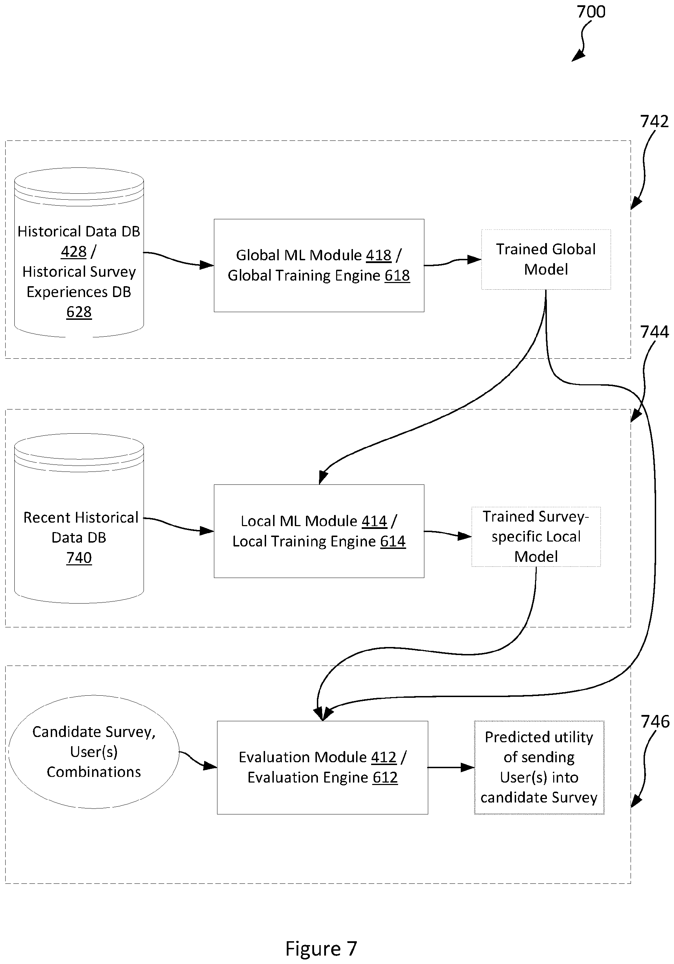

Referring to Figure 7, an example overview of the functionality 700 of the example systems described with reference to Figures 1 to 6 is shown. Arrows in Figure 7 represent inputs and outputs to the various modules/engines. On a periodical (preferably monthly) basis 742, the global ML module 418 (or global training engine 618) is trained using data for a plurality of surveys stored in the historical data DB 428 (or historical survey experiences DB 628). The global training engine 618 typically takes a relatively long time to complete (e.g. several days) due to the amount of training data used. Once training is complete, a trained global model is available for use by the local training engine 614 and/or evaluation engine 612.

Concurrently, continuously and asynchronously 744, the local training engine 614 (or local ML module 414) is trained using recent historical data for the candidate survey and using the trained global model. In this example, the recent historical data for the candidate survey is queried from a recent historical data database 740 which comprises a subset of recent historical data (e.g. data from past 1 day, week or month, or latest 1000 or 10000 data points), and runs on the same server as the local training engine 614, or the same server as the historical survey experiences DB 628. Alternatively, the recent historical data DB 740 is simply a "view" (stored query) on the historical data DB 428 which filters the recent historical data. The local training engine 614 typically takes a relatively short time to complete (e.g. a few seconds) due to the much lower amount of training data used (as compared to the global training engine 618). Once training is complete, a trained candidate-survey-specific local model is available for use by the evaluation engine 612.

The evaluation engine 612 (or evaluation module 412) determines a predicted utility of sending particular user(s) into a particular candidate survey based on input survey & user combinations (preferably denoted via their corresponding attributes) as well as the trained global model and the trained survey-specific local model. The evaluation engine 612 performs this determination in a continuous, synchronous 746 manner. The "candidate survey, users combinations" input corresponds to a particular (candidate) survey, and one or more users for which the evaluation engine 612 is to predict the utility of sending the users to this particular survey (multiple user inputs per survey may allow efficient parallelisation of the computation in the evaluation engine). The utility of sending a user to a survey is determined in part based on a prediction of the user's performance on the survey (expressed via metric(s) - see Table 1 for examples), and the survey (optionally business) goals (which are queried from the survey goals DB 422 (or business goals parameters DB 622) (not shown)). Thanks to its separation from the training engines 618 and 614, the evaluation engine 612 is fast and quick to query (typically taking less than 1 second to query).

In an alternative example, the operations described as periodical with reference to Figure 7 are performed continuously or vice versa.

In a further alternative example, the operations as asynchronous are performed synchronously and vice versa.

***Global Machine Learning Module***

The global machine learning module 418 (or global training engine 618) is trained using historical data from a plurality of surveys (multiple surveys) to output a model which can be used to obtain a "global" prediction of a user's performance on a survey based on input user attributes and survey attributes.

Certain user performance metrics the global (or local) module tries to predict cannot be measured exactly. Examples of such metrics include the probability a user abandons a survey, or the probability that a user never returns to complete more surveys. For example, it is not possible to determine whether a user will never return or simply has not yet returned to complete more surveys. For such metrics, the training data is adjusted accordingly. For example, it is adjusted for a limited time horizon (e.g. 6 months or 1 year) in order to obtain approximate metric historical data - e.g. if a user has not returned in the last 6 months, for the purposes of training the global (or local) ML model, it is assumed that they will never return.

In the present example, module 418 fits a number of sub-models, each sub-model producing a relatively rough "rule-of-thumb" for predicting user performance, and when combined the sub-models produce an accurate prediction tool. Preferably, each trained sub-model attempts to predict the error in the prediction of previous sub-models. In other words, the training of the global ML includes building an ensemble (collection) of successive sub-models with each sub-model learning and improving on the previous. This approach has a number of advantages, as compared to training a single "strong" model, such as fast model training (constructing "weak/rough" sub-models is computationally inexpensive), or a reduced chance and improved detection of overfitting (each sub-model makes only small incremental improvements, so the learning process can be stopped as soon as overfitting is detected).

In the present example, a separate sub-model is fit for each attribute. For example, assuming there are n user attributes, and m survey attributes, (n + m) sub-models are trained by the global ML module 418. The separate trained sub-models can then be used by the evaluation module 412 to refine a starting global prediction of user performance on a survey (i.e. prediction of metric value) to arrive at a "final" global prediction (see further details in sections below). Preferably, each of the (n+m) sub-models can be used to predict the values for all metrics, as described below. Alternatively, the global machine learning module 418 fits a separate sub-model for each attribute and metric combination. For example, assuming there are n user attributes, m survey attributes, and k metrics (user performance metrics), (($n$ + $m$) × $k$) sub-models would be trained by the global ML module 418.Each global sub-model tries to predict the error in the prediction that can be obtained using the previous sub-model(s), so that, once trained, the global sub-models can be combined to produce an accurate prediction tool for obtaining a global prediction of user performance on a survey.

The global sub-models are trained sequentially (one-by-one). Preferably, the order in which the sub-models are trained is the same each time the training process is repeated. Each sub-model is trained using attribute and metric data queried 484 from the historical data DB 428, and using previously trained global sub-models.

For example, to train sub-model j for attribute j, the training data comprises historical data on user performance on surveys from a plurality of surveys (preferably all surveys) as quantified using metric values (recorded metric values across multiple data points), and attribute j values (attribute j values corresponding to the metric values) (in short, a long collection (e.g. list) of attribute j value and metrics values pairs (combinations)), and the metrics values predictions from the previous sub-model (j - 1 ) (which, in the present example, is equivalent to a starting prediction and the parameters of sub-models for previous attributes (1 to (j - 1)).

For the very first sub-model to be trained, the prediction from the previous sub-model does not exist, and so a starting prediction is used instead. For example, the starting prediction may correspond to average metric values across all historical data in the historical data DB 428, or to the survey provider's estimate of user performance (optionally adjusted for reliability and bias in the estimate).

In the present example, the global sub-models trained by the global ML module 418 are decision trees, in which tree nodes represent a single value or a range of values of the model's corresponding attribute (e.g. attribute j), and the leaf nodes (nodes with no children) further comprise an adjustment (or refinement) value for the predictions of the metrics values. Optionally, the global machine learning model may include further components other than decision trees.

In order to construct such a decision tree for attribute j, the module 418 determines the mean "global" metrics values (e.g. denoted via vector $\underline{\mu}$) across all training data inputs. Each tree node represents a single attribute j value or a range of values. The root node of the tree represents the range of all input j attribute values. Subsequently, children nodes are added iteratively. In the present example, the tree is a binary tree and each node has two child nodes (unless it is a leaf node of course), wherein each child node represents a portion of the range of attribute values of the parent node (e.g. if the parent node corresponds to attribute j values between 1 and 100, the children nodes might correspond to ranges of 1-30 and 31-100 respectively).

After each addition of child nodes, the child nodes' statistical significance to the metrics estimates is evaluated in order to determine whether they should have children of their own. The statistical significance is evaluated by determining the probability that the observed values for at least one metric for attribute j values within the node's range occurred because of random noise. If this probability is greater than a specified threshold (e.g. 0.05 or 5%), then the node is deemed to be statistically insignificant and no child nodes are added for it. And, if the opposite is true, i.e. if the probability is lesser than the threshold, child nodes are added, and the process is repeated. In more detail this probability may be determined by:

» Computing the z-score of the metric values for a first metric i for the node, e.g. using

$$Z_{score} = \frac{(node\ metric\ i\ mean\ value) - (\text{global}\ metric\ i\ mean\ value)}{(node\ metric\ standard\ deviation)} = \frac{X - \mu_i}{\sigma}$$

• Computing this probability via the p-value assuming a normal distribution, which represents the probability results at least as extreme as those observed at the node would have occurred if the null hypothesis (which is that the average metric i value for attribute values at this node is not below (if $X < \mu_i$) or not above (if $X > \mu_i$) the "global" average metric i value) is true

○ E.g. if X = 10, $\mu_i$ = 8, and the $\text{z-score} = q,\ (p - value) = \int_{-\infty}^{q} p(x)dx,$ where p(x) is the probability density function of a normal distribution with mean equal to 0 and standard deviation equal to 1.

If the probability for metric i is lesser than the threshold (e.g. 0.05 or 5%), the process terminates, and child nodes are added. On the other hand, if the probability is above the threshold, the process is repeated for the next metric (i+1), and so on until either a metric that corresponds to statistical significance of the node is found, or it is confirmed that the node is not statistically significant with respect to any metric. Following the above method of splitting nodes (adding child nodes) if they are statistically significant, a point is eventually reached at which no further splits would pass the statistical significance test and the tree construction process is complete. At this point, the leaf nodes' adjustments for the predictions of the metrics values are determined. The adjustments are determined using a linear regression algorithm that determines the function for mapping an input attribute j value to the refinement that would need to be applied to the prediction from the previous model (j - 1) to obtain the actual metrics values for the leaf node (i.e. metrics values for attribute value(s) corresponding to the leaf node's range). Preferably, the linear regression model only includes constant and linear coefficients (i.e. a total of two coefficients). Thus, the training data comprises: input data which is the values for attribute j, and output data which is the difference between the metrics values for the leaf node and the predictions for the metrics values using the previous global model (j - 1) (i.e. the predictions based on sub-models for previous attributes 1 to (j - 1)). Considering a single training data set and single metric to simplify the notation, the input may be denoted as $x_j$ (attribute j value), and the output as $(y - z_{j-1})$, where y is a metric value corresponding to the same data point as input $x_j$, and $z_{j-1}$ is a prediction for the metric value from the previous sub-model (j - 1) corresponding to the same data point. The model to be fit for each data point may thus be: $y - z_{j-1} = \theta_{j,0} + \theta_{j,1} \times x_j$, wherein $\theta_{j,0}$ and $\theta_{j,1}$ are the coefficients that are to be determined by the linear regression algorithm. $\theta_{j,0}$ and $\theta_{j,1}$ can be determined via any standard linear regression algorithm, such as gradient descent with a mean square error (MSE) cost function. Once $\theta_0$ and $\theta_1$ are determined for each leaf node, the tree construction is complete, and the tree (model) can be stored 482 in the global model DB 426.

The prediction of a metric's value for a given data point using sub-model j can thus be determined via $z_j = z_{j-1} + \theta_{j,0} + \theta_{j,1} \times x_j$, which can then be used to determine $\theta_{j+1,0}$ and $\theta_{j+1,1}$ and so on. Or, denoted differently, predictions from a sub-model k can be determined based on a starting prediction, $z_0$, and sub-models 1 to k, using $z_k = z_0 +$

$$\sum_{i=1}^{k}(x_i \times \theta_{i,1} + \theta_{i,0}).$$

A person skilled in the art would understand how the above description extends to multiple data points and multiple metrics.

The above-described process is then repeated for tree (attribute) (j + 1) and so on. Accordingly, all sub-models (preferably comprised of trees) can be trained sequentially.

Preferably, the refinements for probabilistic metrics (such as the probability a user will complete a survey) are determined using a logistic function (preferably a standard logistic sigmoid function, $f(x) = \frac{L}{1+e^{-x}}$). The refinements thus aim to predict the logistic, which is then translated to a probability.

### Local Machine Learning Module

The local machine learning module 414 (or local training engine 614) is trained using historical data (preferably recent historical data) from a particular surveys, to output a model which can be used to obtain a "local" (survey-specific) prediction of a user's performance on a survey based on input user attributes.

The local model and sub-models are trained in the same way as the global model and sub-models, except where explained below. The local sub-models (local decision trees) are constructed for user attributes (and not for survey attributes); and the local sub-models are preferably based only on recent data from a particular survey (e.g. results from the last 1 month). Furthermore, local sub-models are trained using the global model which is queried 480 from the global model DB 426.

The starting prediction for the very first local sub-model to be trained is determined based on the trained global model. Preferably, for each user performance metric to be predicted, the initial prediction is the output of the trained global model based on the input user and survey attributes. Subsequently, the local model is trained to predict the difference between that initial prediction and the true value of each metric. An advantage of this is that local machine learning module builds on global model and improves it (rather than starting from scratch) so can use less training data while nevertheless providing an accurate output (prediction).

For example, assuming there are n user attributes, and m survey attributes and that the global sub-models have been trained for each attribute 1 to (n*m), the starting local prediction $z_{0,local}$ (to be used by the very first local sub-model) for a given metric may be obtained via $z_{0,local} = z_{0,global} + \sum_{i=1}^{n \times m}(x_i \times \theta_{i,1,global} + \theta_{i,0,global})$.

The subsequent procedure training of local sub-models (preferably separate sub-models for each user attribute) is otherwise identical to that of the global sub-models described above.

### Evaluation Module

The evaluation module 412 uses the local model and the global model trained by the local ML module 414 and by the global ML module 418 respectively, in order to determine the utility (or value) of user and survey combination(s) (or of sending user(s) to survey(s)). As an intermediate step in this process, the evaluation module 412 determines a combined prediction of a particular user's performance on a particular survey. For example, the evaluation module 412 determines a combined prediction of the value of metric M for a user A and survey X combination based on the user A attributes and the survey X attributes, and subsequently determines a prediction of the utility of sending user A to survey X.

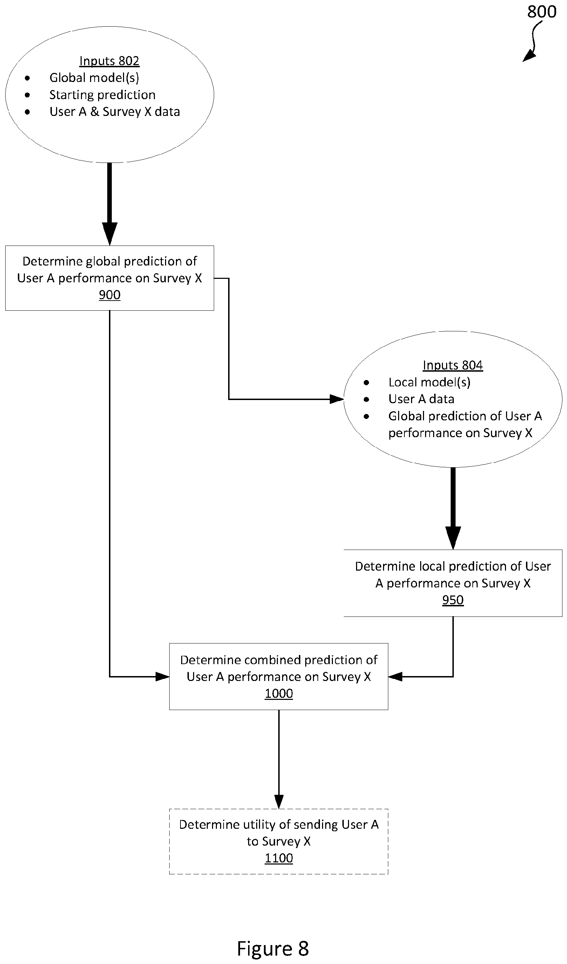

Referring to Figure 8, an overview of an example method 800 for predicting the utility of sending a user A to a survey X is shown. Based on inputs 802, the evaluation module determines 900 a global prediction of user A performance on survey X. Further, based on inputs 804, the evaluation module determines 950 a local prediction of user A performance on survey X. In the present example, inputs 804 include the output of step 900 (i.e. the global prediction), so step 950 is performed after step 900. In an alternative example, steps 900 and 950 are independent and may be performed concurrently.

Once both the local and global estimates are determined, the evaluation module determines 1000 a combined prediction of user A performance on survey X (as quantified using one or more predicted metrics (e.g. completion rate) values). Method 800 may terminate at this point, in which case the evaluation module 412 may output the determined combined prediction of user performance (e.g. to the API gateway 408). More preferably, the evaluation module 412 determines 1100 the utility of sending user A to survey X based on the combined prediction of user performance.

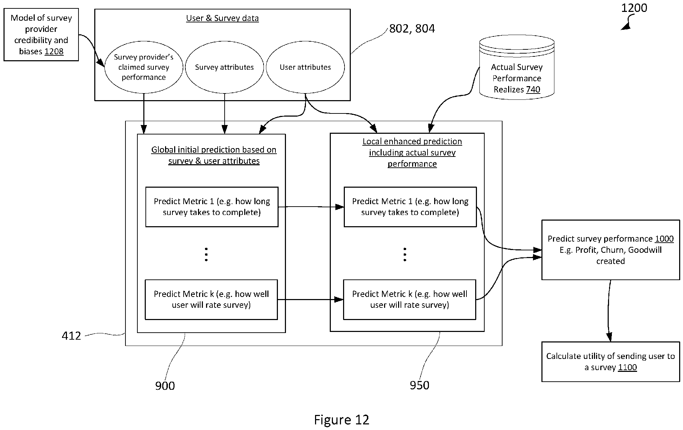

Referring to Figure 12, an example implementation 1200 of method 800 for predicting the utility of sending a user to a survey is shown. The method 1200 in this further example is identical to method 800 described with reference to Figure 8, except where explained below, and corresponding reference numerals are used to refer to similar features. First, a "global" initial prediction of user performance is determined 950 based on inputs 802, which comprise: user and survey attributes, and the survey provider's claimed survey performance which is used to determine the starting global prediction. The survey provider's claimed performance input is adjusted using a model 1208 of the survey provider's credibility and biases. The model 1208 may for example be based on a linear regression between the survey provider's estimates and the actual user/survey performance on related metrics The determination of a global prediction of user performance on the survey includes determining global prediction(s) for one or more metrics - e.g. metric 1 being the time for user to complete survey, and metric k being the rating the user will assign to the survey. Subsequently, a "local" enhanced prediction of user performance including (based on) actual survey/user performance is determined 950 based on inputs 804 and data from actual survey performance realizes (recent historical data DB) 740. The local prediction may further be based on an earlier determined global prediction. Similarly to the global prediction, the determination of a local prediction of user performance on the survey includes determining local prediction(s) for one or more metrics. Next, the local and global predictions are combined in order to predict 1000 the survey's performance. As part of step 1000, combined predictions for individual metrics may, under certain conditions, be combined into a single prediction of survey performance - e.g. overall success rate (see further details in sections below). Finally, the utility of sending the user to the survey is calculated 1100.

*Global prediction*

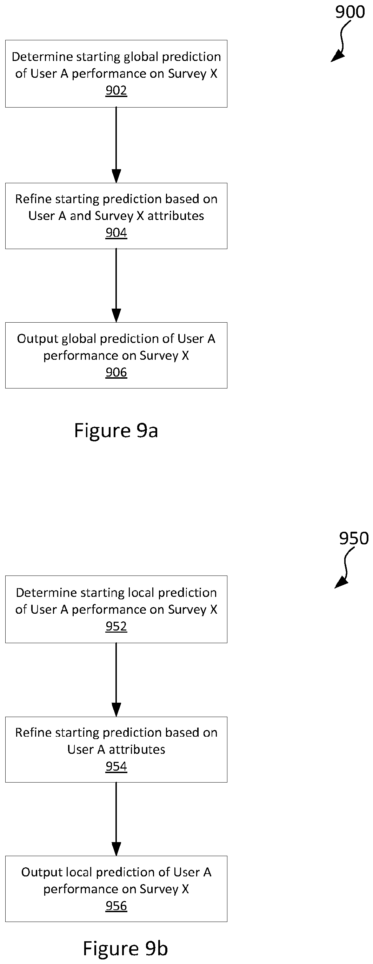

Referring to Figure 9a, an example method 900 for determining a global prediction of user A performance on survey X is shown. In the present example, a separate global prediction is determined for each metric - thus, method 900 corresponds to a method for predicting the value of metric M for user A and survey X. Method 900 is optionally performed by the first machine learning sub-module.

First, the evaluation module 412 determines 902 a starting global prediction of the value of metric M for user A and survey X. In the present example, the starting prediction is based on the survey provider's estimated metric M value. In determining the starting prediction, the evaluation engine further accounts for the reliability and bias in that survey provider's estimate, for example via a model 1108 of survey provider credibility and biases. Model 1108 is preferably part of the evaluation module 412, but it may alternatively run (be part of) on the web server 104 or database server 106 as part of the above described web service(s) and database(s) or as a distinct database or web service. In the present example, model 1108 tracks estimates provided by survey providers and compares them to actual metric values queried from the historical data DB 428. In this way, model 1108 determines a measure of the bias in the survey provider's estimates. For example, if a given survey provider's estimates are on average 20% higher than the actual metric values, the model adjusts the starting prediction accordingly (dividing it by 1.2). If no data related to survey X's provider's estimates is available, average bias for other (preferably all) survey providers estimates for metric M are used. Once the bias in the survey provider's estimate is accounted for, a starting global prediction of metric M value for user A and survey X is ready for use at the next steps of method 900.

The starting global prediction (estimate) of metric M value for user A and survey X is then refined 904 based on user A and survey X attributes using the global model queried 476 from the global model DB 426. In the present example, the global model is a collection of decision trees for each user and survey attribute, as described above. Thus, in order to refine the global prediction, for each attribute, the evaluation module 412 traverses its decision tree (current attribute tree) based on the value of the attribute until a leaf node is reached, at which point an adjustment is applied to the prediction using coefficients $\theta_0$ and $\theta_1$ corresponding to metric M determined in training the global sub-models (expressed mathematically: $Prediction_{refined} = \theta_0 + \theta_1 \times AttributeValue + Prediction_{current}$). This procedure is repeated for each user A and survey X attribute, and, once completed for all attributes, a final "refined" global prediction of the value of metric M for user A and survey X is output 906.

The adjustments are preferably always applied in the same attribute order (e.g. user attribute 1, user attribute 2, ..., metric attribute 1, metric attribute 2, ...) for consistency.

If after the refinement process 904 is completed the metric M value is beyond a permitted range (e.g. a negative time to complete a survey), an additional adjustment is applied to set the metric M value at the edge of the permitted range (e.g. probability equal to 1 or 0, or a time of zero).

The above-described order of traversing attribute trees first and then applying adjustments does not necessarily need to be followed. For example, equally, all attribute trees may be first traversed to identify the appropriate $\theta_0$, $\theta_1$ coefficients for each attribute, and then all the adjustments may be applied at once using $z_{final} = z_0 + \sum_{i=1}^{n \times m}(x_i \times \theta_{i,1} + \theta_{i,0,})$, where $x_i$ is the value for the i'th attribute, $z_0$ is the starting prediction, and $z_{final}$ is the final "refined" prediction.

*Local prediction*

Referring to Figure 9b, an example method 950 for determining a local prediction of user A performance on survey X is shown. In the present example, a separate local prediction is determined for each metric - thus, method 950 corresponds to a method for predicting the value of metric M for user A and survey X. Method 950 is identical to method 900 described with reference to Figures 9a, except where explained below, and corresponding reference numerals are used to refer to similar features. Method 950 is optionally performed by the second machine learning sub-module.

First, the evaluation module 412 determines 952 a starting local prediction of the value of metric M for user A and survey X. In the present example, the starting local prediction is the global prediction which may be obtained as described above. Alternatively, the starting local prediction may be the average metric M value for all users who took survey X.

Next, the starting local prediction is refined 954, much in the same away as the global estimate refinement 904 described with reference to Figure 9a above, except that refinement 954 uses the local model, and it is based on user A attributes (and not survey X attributes). Preferably, a further difference between the local refinement 954 and global refinement 904 is that in the local refinement 954 only attributes whose effects are statistically significant are considered. The statistical significance may be determined in a similar manner to that described above with reference to the construction of the global model decision trees. For example, the z-score may be determined via $z_{score} = \frac{(attribute\ metric\ M\ mean\ value) - (\text{global}\ metric\ M\ mean\ value)}{(attribute\ metric\ M\ standard\ deviation)} = \frac{X - \mu}{\sigma}$ and the above described procedure followed otherwise.

This procedure is repeated for each user A attribute that is deemed statistically significant, and, once completed for all such attributes, a final "refined" local prediction of the value of metric M for user A and survey X is output 956.

*Combining global and local predictions*

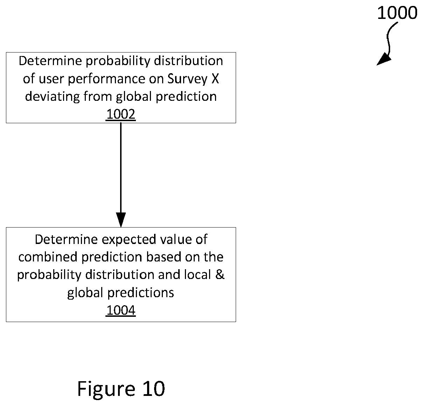

Referring to Figure 10, an example method 1000 for determining a combined prediction of user A performance on survey X is shown. In the present example, a separate combined prediction is determined for each metric - thus, method 1000 corresponds to a method for predicting the value of a metric M for user A and survey X. Preferably, methods 900, 950, and 1000 are repeated for all other metrics in order to arrive at a combined prediction of user A performance on survey X. Method 1000 is optionally performed by the processing sub-module.

In the present example, the predicted value of metric M is determined by: first, determining 1002 a probability distribution of the metric's value deviating from the global prediction, and second, determining 1004 the expected value (preferably the Bayesian expected true value) of the combined prediction (i.e. determining the combined prediction) based on the probability distribution determined at step 1002 and the global and local predictions determined at steps 900 and 950 respectively.

In more detail, in order to determine 1002 the probability distribution, first, a starting probability distribution is computed. For example, the evaluation module 412 calculates the starting probability distribution as a histogram of deviations ($\Delta$) in the value of metric M from the global prediction of the value of metric M across a plurality (preferably all) surveys using data queried from the historical data DB 428 - or, expressed more mathematically, a histogram of: ((*global prediction, G*) - (*historical value, H*)) *vs.* (*probability of deviation, P*($\Delta$)). Optionally, only a subset of results from the historical data DB 428 is used to reduce computational cost - e.g. only recent results, or results for surveys with similar attributes.

This starting distribution is then adjusted for the chance of observing a particular outcome for a survey given a true rate. For example, the observed termination count may differ from the true termination rate because of the inherently limited size of the observation dataset. In the present example, the starting distribution is adjusted by determining the probability distribution of deviations (P(D)) between the true metric value (T) and the observed metric values (which may for example be represented by the average observed metric value, $H_\mu$). P(D) is determined for all possible (or realistic) true values (e.g. $T_i$), which are preferably sampled (e.g. it is determined for possible true termination rates between 0 and 1 at steps of 0.01). P(D) for a given true metric value $T_i$ is computed by calculating the probability that the observed historical values would in fact be observed if $T_i$ was indeed the true metric value.

Once both probability distributions, P(D) and $P(\Delta)$ are determined, they are then used to determine 1004 the expected value of the combined prediction of the value of metric M for user A and survey X. For example, the expected value of the combined prediction can be determined via a weighted sum (or integral) over possible true values (e.g. $T_i$):
$E = G + \sum_{possible\ true\ values}(L - G + H_\mu - T_i) * P(\Delta = (L - G + H_\mu - T_i)) * P(D = H_\mu - T_i)]$, where the expected value is denoted by E, the probability distribution of deviations from the global estimate by $P(\Delta)$, the probability distribution of deviations between the true value and the observed values P(D), and the global and local predictions by G and L respectively.

The determined expected value E represents a combined prediction of the value of metric M for user A and survey X.

In an alternative example, the evaluation engine does not determine the probability distribution of the metric's value deviating from the global prediction itself (as described with reference to step 1002 above), but rather queries 476 the probability distribution from the global model database 426. In this alternative example, the corresponding probability distributions are computed for all survey, user, and metric combinations as part of the training process of the global model by the global machine learning module 418, and subsequently stored in the global model database 426. Preferably, the probability distributions are computed directly after the global model has been trained/re-trained so at to be most up to date.

*Combining metrics*

The combined predictions for a plurality of metrics can in some circumstances be combined into a single metric prediction, thereby providing a single figure for the comparison of surveys/users and/or reducing the computational cost of subsequently determining the utility of sending a user to a survey.

In particular, metric predictions can be combined for certain probabilistic metrics that are predominantly independent and whose probabilities can be meaningfully multiplied. For example, the prediction for the survey completion rate (probability user completes a survey) metric may be based on separate predictions for prequalification rate, termination rate, and drop rate among users who did not terminate.

Notably, combining metrics in this manner (after prediction) may result in a more accurate prediction for the combined metric than if metrics were combined before the prediction process 800. In particular, the global and local model training process (especially the construction of the decision trees in the present example) may be more accurate for the lower level metrics (metrics combined to arrive at the combined metric) than it would have been for the combined metric.

*Determining utility of user & survey combination*

Although method 800 may terminate at determining a prediction of user A performance on survey X, this prediction is preferably an intermediate output that is then used in order to determine 1100 the utility of sending user A to survey X. Method 1100 is optionally performed by the processing sub-module.

In the present example, the utility is quantified using an arbitrary monetary value. The predicted one or more metrics values are mapped to a monetary value. The mapping parameters (which may be linear or non-linear) preferably depend on the survey goals queried 472 from the survey goals DB 422. For example, if the survey goals include user satisfaction, a higher weighting may be applied to the value of the user's survey rating metric. The use of survey goals may provide a very flexible framework capable of incorporating arbitrary business goals (such as revenue, profits, user retention, and client satisfaction) in order to match users to surveys in a way that serves some or all of those goals simultaneously. Mapping parameters may optionally be adjusted based on survey goals within the survey goals DB 422, and the mapping parameters may themselves be queried 472 from the survey goals DB 422, thereby removing the need to query the survey goals. Alternatively, the mapping parameters are stored directly within the evaluation module 412, and they are adjusted once the survey goals have been queried 472.

The monetary value (of sending user A to survey X) is preferably determined using a function (F) of: metrics predictions (e.g. termination rate, drop rate, survey rating), and user A and survey X attributes. For example, certain metrics such as user rating may be more "valuable" than others - the value associated with the metric may be higher than that of others; and certain users may be more valuable - e.g. the expected revenue (if that is the survey goal) may be increased with increasing user age (user age attribute values). Yet more preferably, the function (F) is a sum of component monetary value functions (e.g. function fi) for one or more survey goals - e.g. a sum of separate functions corresponding to goals of user satisfaction, and user return probability. Preferably, each component utility function fi determines the utility associated with a single goal (e.g. goal i), but it may likewise determine the utility associated with multiple survey goals.

The utility (monetary value) computation preferably further includes an information pricing component, whereby, if no or little historical data is available on survey X, the value of the utility of sending user A to survey X is increased (and, optionally, vice versa). This way the utility of new information (i.e. on new surveys) is priced in by adding in a "boost" to account for the utility of gathering real information (and having to rely on assumptions less) which would in turn allow obtaining a more accurate combined prediction of user A performance on survey X. By assigning a monetary value to the gathering of information on surveys, the evaluation module 412 can trade off sending users to surveys known to perform well (which have "positive" metric values (e.g. high completion rate) and so a high monetary value) versus sending users to new surveys to find out if those surveys will perform better than current expectations (which were computed with little survey-specific data available).

The information pricing component for survey X may for example be computed by determining the expected monetary value if survey X had "positive" true metric values (i.e. if over a large sample size, the average metric values would be "positive") and multiplying this by the probability that survey X has "positive" true metric values based on the historical data observed thus far. In other words, the information pricing component thus accounts for the expected monetary value (utility) if the metrics for survey X are sufficiently "positive" that survey X would be sent to further users. The information pricing component allows avoiding prematurely (based on a small sample size) giving up on or closing poorly performing surveys as it takes into account the chance that the surveys might still perform well with users.

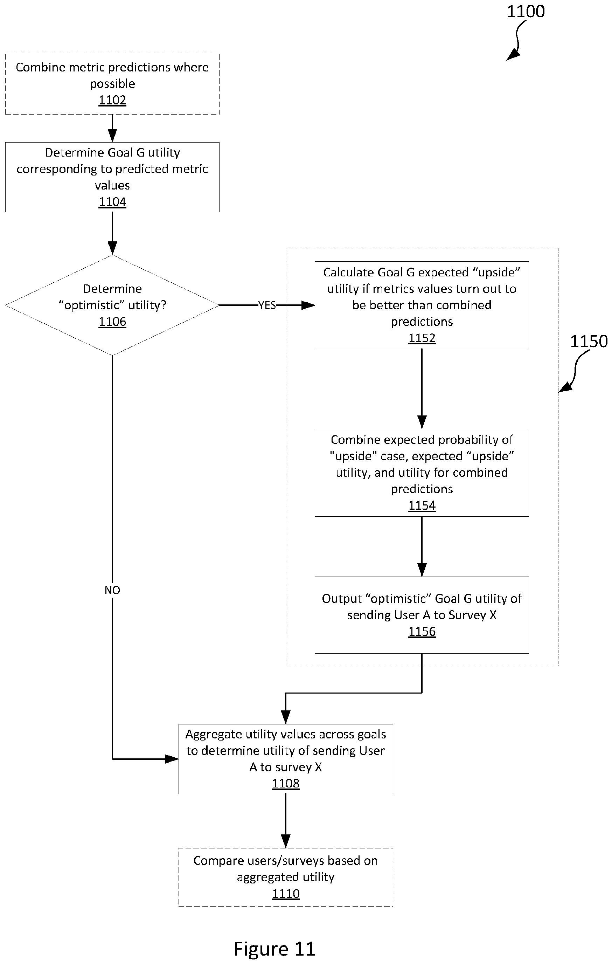

Referring to Figure 11, an example method 1100 of determining the utility of sending user A to survey X is shown. In the present example, a separate utility is first determined 1106 (or 1156) for each utility function component (e.g. fi as described above), wherein each component preferably corresponds to a given survey goal (e.g. goal G), and these separate utilities may subsequently be aggregated 1108 (e.g. summed) to arrive at a single utility figure which represents the utility of sending user A to survey X. Thus, preferably, the utility is determined for each survey goal, and such utilities are then combined to arrive at a single utility figure. Alternatively, a function $f_i$ may determine the utility for two or more survey goals, in which case the utility is determined for each component and subsequently summed.

Optionally, before determining the utility, the predictions for certain metrics are combined 1102 with predictions for other metrics (as described above), thereby rendering a reduced metrics predictions dataset.

Next, the utility to goal G corresponding to the predicted one or more metrics values is determined 1104 by mapping it to a monetary value as described above.

Subsequently, a choice is made whether to compute a "standard" (computed at step 1104) or "optimistic" (steps 1152-1156) utility figure for goal G. The "optimistic" utility is optionally the "standard" utility figure with an additional information pricing component as described above.

If the answer at step 1106 is "NO", the "standard" utility computed at step 1104 is used as the utility for (with respect to) goal G..

If, on the other hand, the answer at step 1106 is "YES", an "optimistic" utility to goal G corresponding to the predicted one or more metrics values is determined via method 1150.

In order to determine the "optimistic" utility of sending user A to survey X, first, the evaluation engine 412 determines 1152 the expected ("upside") goal G utility if the metrics values turn out to be greater than the combined predictions determined at step 1000 of method 800. For example, the "utility" assuming arbitrary "positive" metric values (e.g. 95% completion rate, or 4.8/5 survey rating) is computed for goal G.

Next, an "optimistic" utility of sending user A to survey X is determined 1154 by combining: the expected probability of the "upside" (probability that the goal G utility value is greater than the "standard" goal G utility computed at step 1104), the expected "upside" goal G utility determined at step 1152, and the "standard" goal G utility corresponding to the utility value computed based on the metrics predictions determined via the combined prediction method 1000. The probability of the "upside" ($P_{upside}$) is determined using standard statistical methods known to a person skilled in the art. In order to reduce computational costs, $P_{upside}$ may be computed using the probability distributions of deviations (e.g. $P(\Delta)$ and/or $P(D)$) used in method 1000, or else based on historical survey data queried from the historical survey DB 428. Once $P_{upside}$ is determined, the "optimistic" utility can be computed via: $U_{opt} = U_{standard} + U_{upside} \times P_{upside}$, where $P_{upside}$ denotes the probability of the "upside", $U_{standard}$ denotes the utility associated with the combined predicted metrics values, $U_{opt}$ the "optimistic" utility, and $U_{upside}$ the upside utility determined at step 1152. The output 1156 is the "optimistic" utility $U_{opt}$ of sending user A to survey X.

Alternatively, a single "upside" utility is not computed, and the "optimistic" utility may be determined as a "standard" utility summed with a sum (or integral) over all (preferably sampled) possible "upside" metric values (metric values greater than their combined predictions) and their corresponding "upside" utilities and probabilities of such "upside" cases via e.g.. $U_{opt} = U_{stanard} + \Sigma_{possible\ upside\ metric\ values}(U_{upside} \times P_{upside})$.

Once the predicted metric values are mapped to monetary values (whether using a "standard" or "optimistic" approach), the monetary values may be aggregated 1108 (e.g. summed) to arrive at a single monetary value figure which represents the utility of sending user A to survey X. Optionally, this single utility value may subsequently be used to compare 1110 different survey options for a user or vice versa (different possible users a survey may be sent to). For example, the evaluation module 412 may compare a number of candidate surveys for user A in this manner, and output 462 a ranked list of surveys.

*Example application*

The present disclosure is particularly applicable to matching users with new surveys (surveys for which little or no historical data is available). The global prediction of user performance may be inaccurate for such new surveys, as the relationship between user and survey attributes for the new survey may be significantly different to that across other surveys. By combining a local, survey-specific prediction with the global prediction, the present disclosure may allow for a more accurate prediction of user performance on a survey.

Furthermore, combining local and global predictions may allow for quicker detection of poorly-performing surveys (requiring fewer historical data on surveys), as the local survey-specific prediction would promptly (based on only a handful of data points) output "negative" (e.g. low survey ranking or completion rate) metric predictions for such surveys, which in turn would shift the combined prediction. Thus, even if a global prediction were "positive", the local prediction would shift the combined prediction towards a more accurate survey-specific local prediction that may be more "negative".

Thus, the present disclosure allows making more efficient use of data by closing poorly-performing surveys. The evaluation module 412 (or the closure sub-module) can determine which surveys are worth sending more users to and which surveys would be better to close after being sent to only a handful of users. This may in turn substantially lower the storage and computational cost of adding new surveys (which may be of a mixed quality) to the survey provider's inventory.

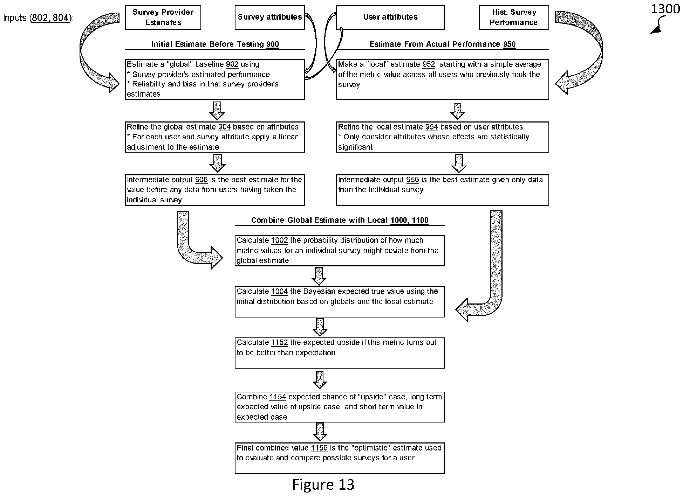

Referring to Figure 13, an example implementation 1300 of method 800 for predicting the performance of a user on a new survey and optionally the "optimistic" utility of sending a user to the new survey is shown. The method 1300 in this further example is identical to method 800 described with reference to Figure 8, except where explained below, and identical reference numerals are used to refer to identical features. In method 1300, predictions of user performance and utility (value) are made on a per metric basis - thus, method 1300 corresponds to a method for predicting the value of a particular metric, and optionally the "optimistic" value associated with the metric value prediction.

First, an initial global estimate of the metric's value is determined 900 before testing of the survey (before historical data on the survey is available). A starting global baseline is estimated 902 based on the survey provider's estimated performance (metric value) and the reliability and bias in that survey provider's estimates. The global prediction (estimate) is then refined 904 based on user and survey attribute. For each user and survey attribute, a linear adjustment is applied to the global estimate. The adjustments are determined from the global model trained by the global ML module 418. Once the refinement process 904 is complete, the refined intermediate output 906 is the "best" estimate for the value of the metric before any historical data from users having taken the survey is available.

As historical data on actual performance of the survey becomes available, a local, survey-specific estimate from the actual performance is determined 950. A starting local estimate is determined 952 as the average of the metric value across all users who previously took the survey. The local estimate is then refined 954 based on user attributes. The refinement process 954 is identical to the refinement process 904 for the global estimate, except that refinement 954 is based on user attributes and only attributes whose effects are statistically significant are considered. Once the refinement process 954 is complete, the refined intermediate output 956 is the "best" estimate for the value of the metric given only historical data for the individual survey.

Subsequently, the global estimate is combined with local estimate to determine 1000 a combined predication of the metric value and optionally the "optimistic" utility of sending the user to the survey. In order to determine the combined prediction, first, the probability distribution of how much metric values for an individual survey might deviate from the global estimate is calculated 1002. Using this probability distribution, as well as the global and local estimates the Bayesian expected true value of the metric value is determined 1004 - i.e. a combined prediction of the metric value is determined. The expected "upside" (utility) if this metric (value) turns out to be better than the expectation (combined prediction) may subsequently be determined 1152. This expected "upside" may then be combined 1154 with the expected chance of the "upside" case, long term expected value (utility) of the "upside" case, and the short term value (utility) in the expected case, to arrive at a final combined utility 1156 which is the "optimistic" utility estimate. In this context, the "upside" case correspond to long term utility as if the survey has a high true utility, it will be sent to many users and the benefits of the high utility will be reaped multiple times, over several days, weeks, or months. On the other hand, the expected case corresponds to the short term utility as if the survey has a low true utility, the losses associated with sending a user to the survey (instead of a survey with a high true utility) is only lost once (immediately),

The utility estimate ("optimistic" or "standard") may then be used to evaluate and compare possible surveys for a user, either aggregated with other utility estimates or in isolation. For example, the evaluation module 412 (or the routing sub-module) may determine the estimated utilities for a number of candidate surveys for a user. The evaluation module 412 may subsequently output a ranked list of surveys (ranked by utility) and/or the best (highest ranked) survey, and/or route the user to the top-ranked survey.

Furthermore, the evaluation module 412 may detect surveys which are poorly-performing - either in terms of their metric predictions or utility predictions - and output this information (e.g. to the survey provider server 116). In the present example, the evaluation module 412 may close a survey if its predicted utility is below a certain (first) threshold. An example first threshold may be the utility value of not sending the user to any survey which may be computed e.g. based on user attributes. Thus, if the utility of not sending the user to any surveys (e.g. telling the user that no surveys are available) is greater than the utility of sending a user to this survey, the survey may be closed.

In addition, the evaluation module 412 (or the closure sub-module) may detect surveys for which the predicted (or average observed) values for particular metrics are below or above a certain (second) threshold. For example, the evaluation module 412 may detect surveys for which the drop rate is above 80%. The survey provider and/or the system admin may then be notified (via the API gateway 408) that the survey did not satisfy the second threshold, and the survey may subsequently be manually reviewed by the system admin and/or survey provider.

In an alternative example, once it is detected that the predicted utility of sending a user to a survey is below a certain (first) threshold, the evaluation module 412 flags the survey for further investigation. The predicted utility of this survey may then be determined for a plurality of other ("test") users whose attributes are stored in the historical data DB 428. Preferably, the attributes of the "test" users are different to those of the input user that initially flagged the survey and from each other. If the proportion of "test" users for which the predicted utility of the survey is below the first threshold is above another (third) threshold, the survey is marked as poorly-performing. This information may then be output - e.g. transmitted 462 to the API gateway 408 from where it may be transmitted 452 to the survey provider API 430 or to the analytics module 410.

In a further alternative example, the comparison and ranking of surveys, and closing of poorly-performing surveys is based on the combined metric(s) predictions rather than the utilities.

### *Alternative Examples and Embodiments*

A person skilled in the art will appreciate that many different combinations of embodiments and examples described with reference to Figures 1 to 13 may be used alone unmodified or in combination with each other.

The described examples of the invention are only examples of how the invention may be implemented. Modifications, variations and changes to the described examples will occur to those having appropriate skills and knowledge. These modifications, variations and changes may be made without departure from the scope of the claims.

For example, the global ML module 418 and local ML module 414 may train any other machine learning models than the decision tree-based models described purely by way of example above. For example, the global and local modules 418, 414 may train neural networks with user and survey attributes, and user attributes serving as inputs for the global and local models respectively. The global and local predictions may then be obtained via inference of the respective neural network models, and combined into a combined prediction as described above.

### Claims

1. A system for use with a web-based platform of user-accessible resources, comprising:

   a first machine learning sub-module configured to provide a first prediction related to a user's interaction with a resource based on at least historic data of user interaction with a plurality of resources;
   a second machine learning sub-module configured to provide a second prediction related to a user's interaction with a resource based on at least: historic data of user interactions with the resource; and the first prediction; and
   a processing sub-module configured to calculate a combined prediction related to a user's interaction with a resource.

2. A system according to Claim 1, wherein the processing sub-module is configured to compare the combined prediction against at least one further combined prediction; the at least one further combined prediction being in relation to a respective at least one further resource.

3. A system according to Claim 2, further comprising a closure sub-module configured to remove access to a particular resource based at least on the output of the processing sub-module.

4. A system according to Claim 2 or 3, further comprising a routing sub-module configured to route the user to a particular resource based at least on the output of the processing sub-module.

5. A system according to any preceding claim, wherein the processing sub-module is further configured to evaluate the utility of routing a user to a particular resource based at least on the combined prediction and the volume of historic data of user interactions with the resource.

6. A system according to Claim 5, wherein said evaluation of utility is further based on pre-defined goals for the operation of the system.

7. A system according to any preceding claim, wherein said first prediction is further based on attributes of the resource; and attributes of the user; preferably wherein the attributes of the user comprise a demographic group associated with the user.

8. A system according to any preceding claim, wherein said first prediction is further based on an expectation related to a user's interaction with a resource; preferably wherein said expectation is weighted based on an expected reliability of the expectation; more preferably wherein said expected reliability is determined by comparing at least one expectation related to a user's interaction with at least one other resource with a observed value related to a user's interaction with that at least one other resource.

9. A system according to any preceding claim, wherein said second prediction is further based on the attributes of the user; preferably wherein only statistically significant attributes are used.

10. A system according to any preceding claim, wherein the historic data of user interaction with the resource is weighted based on recency.

11. A system according to any preceding claim, wherein the resource relates to a survey; preferably wherein predictions related to a user's interaction with a resource relate to at least one of: a user's performance on a survey; how long a user will take to complete the survey, how a user will rate the survey, the chance a user will qualify for the survey, the chance that a user will complete the survey, and the chance that a user returns to take more surveys.

12. A system according to any preceding claim, wherein the system further comprises a first machine learning module configured to train a first machine learning model, and a second machine learning module configured to train a second machine learning model; wherein the second model is re-trained more frequently than the first model.

13. A system according to Claim 12, wherein the second model is trained further using the first model.

14. A system according to Claim 12 or 13, wherein the first and second models comprise a plurality of sub-models; preferably wherein the sub-models comprise decision trees.

15. A method for use with a web-based platform of user-accessible resources, the method comprising:

    using a first machine learning sub-module, providing a first prediction related to a user's interaction with a resource based on at least historic data of user interaction with a plurality of resources;
    using a second machine learning sub-module, providing a second prediction related to a user's interaction with a resource based on at least: historic data of user interactions with the resource; and the first prediction; and
    using a processing sub-module, calculating a combined prediction related to a user's interaction with a resource.

100

User Device
102$_1$

User Device
102$_2$

User Device
102$_N$

*108*, 120

*108*, 120

*108*, 120

118, 120

Internet
114

Survey Provider
Server
116

*108*, 110, 118

110

Web Server
104

Database
Server 106

Figure 1

102

Browser
application
250

CPU 202

Memory 204

Storage 206

Internet
Communication
Module
210

214

Removable
Storage
208

User Interface
212

216

220

218

Figure 2

104

Web service(s)
316

CPU 302

Internet
Communication
Module 310

Memory 304

Storage 306

314

Removable
Storage 308

Figure 3

400

| 102 | User Device Browser Application 250 | Survey Provider API 430 | 416 | System Admin API 432 |

450

452, 454

456, 458

404

460

API Gateway 408

462

466

468

| Analytics Module 410 | Evaluation Module 412 | Local ML Module 414 | Global ML Module 418 | Logging Module 420 |

470

472

474

476

478

480

482

484

486

406

| Survey Goals DB 422 | Local Model DB 424 | Global Model DB 426 | Historical Data DB 428 |

Figure 4

500

428

Figure 5a

Figure 5b

600

Survey Provider Server Cloud 616

Web Server 604

Evaluation Engine 612

Business Goal Params DB 622

Participant Users 602₁ − 602ₙ

API Gateway Server 608

Recent Activity

Local Training Engine 614

Local Survey Model DB 624

Global Training Engine 618

Global Survey Model DB 626

Log Activity

Diagnostic dashboards engine 610
- View survey performance
- View survey provider user metrics
- Adjust business goals

Administrators 632₁ − 632ₘ

Historical Survey Experiences DB 628

Figure 6

700

742

Historical Data DB
428 /
Historical Survey
Experiences DB
628

Global ML Module 418 /
Global Training Engine 618

Trained Global
Model

744

Recent Historical
Data DB
740

Local ML Module 414 /
Local Training Engine 614

Trained Survey-
specific Local
Model

746

Candidate Survey,
User(s)
Combinations

Evaluation Module 412 /
Evaluation Engine 612

Predicted utility
of sending
User(s) into
candidate Survey

Figure 7

800

**Inputs 802**
- Global model(s)
- Starting prediction
- User A & Survey X data

Determine global prediction of
User A performance on Survey X
900

**Inputs 804**
- Local model(s)
- User A data
- Global prediction of User A
  performance on Survey X

Determine local prediction of User
A performance on Survey X
950

Determine combined prediction of
User A performance on Survey X
1000

Determine utility of sending User A
to Survey X
1100

Figure 8

900

Determine starting global prediction
of User A performance on Survey X
902

Refine starting prediction based on
User A and Survey X attributes
904

Output global prediction of User A
performance on Survey X
906

Figure 9a

950

Determine starting local prediction
of User A performance on Survey X
952

Refine starting prediction based on
User A attributes
954

Output local prediction of User A
performance on Survey X
956

Figure 9b

1000

Determine probability distribution
of user performance on Survey X
deviating from global prediction
1002

Determine expected value of
combined prediction based on the
probability distribution and local &
global predictions
1004

Figure 10

1100

Combine metric predictions where possible
1102

↓

Determine Goal G utility corresponding to predicted metric values
1104

↓

Determine "optimistic" utility?
1106

—YES→ Calculate Goal G expected "upside" utility if metrics values turn out to be better than combined predictions
1152

1150

↓

Combine expected probability of "upside" case, expected "upside" utility, and utility for combined predictions
1154

↓

Output "optimistic" Goal G utility of sending User A to Survey X
1156

NO

↓

Aggregate utility values across goals to determine utility of sending User A to survey X
1108

↓

Compare users/surveys based on aggregated utility
1110

Figure 11

1200

| Model of survey provider credibility and biases 1208 |

**User & Survey data**

Survey provider's claimed survey performance

Survey attributes

User attributes

802, 804

Actual Survey Performance Realizes 740

**Global initial prediction based on survey & user attributes**

Predict Metric 1 (e.g. how long survey takes to complete)

⋮

Predict Metric k (e.g. how well user will rate survey)

**Local enhanced prediction including actual survey performance**

Predict Metric 1 (e.g. how long survey takes to complete)

⋮

Predict Metric k (e.g. how well user will rate survey)

Predict survey performance 1000 E.g. Profit, Churn, Goodwill created

Calculate utility of sending user to a survey 1100

412

900

950

Figure 12

Inputs (802, 804):

1300

| Survey Provider Estimates | Survey attributes | User attributes | Hist. Survey Performance |

**Initial Estimate Before Testing 900**

Estimate a "global" baseline 902 using
* Survey provider's estimated performance
* Reliability and bias in that survey provider's estimates

Refine the global estimate 904 based on attributes
* For each user and survey attribute apply a linear adjustment to the estimate

Intermediate output 906 is the best estimate for the value before any data from users having taken the individual survey

**Estimate From Actual Performance 950**

Make a "local" estimate 952, starting with a simple average of the metric value across all users who previously took the survey

Refine the local estimate 954 based on user attributes
* Only consider attributes whose effects are statistically significant

Intermediate output 956 is the best estimate given only data from the individual survey

**Combine Global Estimate with Local 1000, 1100**

Calculate 1002 the probability distribution of how much metric values for an individual survey might deviate from the global estimate

Calculate 1004 the Bayesian expected true value using the initial distribution based on globals and the local estimate

Calculate 1152 the expected upside if this metric turns out to be better than expectation

Combine 1154 expected chance of "upside" case, long term expected value of upside case, and short term value in expected case

Final combined value 1156 is the "optimistic" estimate used to evaluate and compare possible surveys for a user

Figure 13

Europäisches
Patentamt

European
Patent Office

Office européen
des brevets

**EUROPEAN SEARCH REPORT**

Application Number

EP 20 27 5079

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/023043 A1 (CETIN OZGUR [US] ET AL) 26 January 2012 (2012-01-26) * abstract * * paragraph [0017] - paragraph [0029] * * paragraph [0041] - paragraph [0052] * * paragraph [0065] * | 1-15 | INV. G06N20/20 G06N5/00 ADD. G06N3/04 |
| X | US 9 723 144 B1 (GAO SHANG [US] ET AL) 1 August 2017 (2017-08-01) * abstract * * column 5, line 25 - line 35 * * column 14, line 36 - line 63 * * column 8, line 35 - column 11, line 11 * * column 2, line 13 - line 54 * | 1-15 | |
| X | US 2007/150424 A1 (IGELNIK BORIS M [US]) 28 June 2007 (2007-06-28) * abstract * * paragraph [0029] - paragraph [0030] * * paragraph [0075] - paragraph [0081] * | 1-15 | |
| A | US 2019/166144 A1 (MIRSKY YISROEL AVRAHAM [IL] ET AL) 30 May 2019 (2019-05-30) * abstract * * paragraph [0008] - paragraph [0030] * | 1-15 | TECHNICAL FIELDS SEARCHED (IPC) G06N |

The present search report has been drawn up for all claims

| Place of search | Date of completion of the search | Examiner |
|---|---|---|
| The Hague | 7 October 2020 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 27 5079

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2020

| Patent document cited in search report | | | Publication date | Patent family member(s) | | | Publication date |
|---|---|---|---|---|---|---|---|
| US 2012023043 | A1 | | 26-01-2012 | NONE | | | |
| US 9723144 | B1 | | 01-08-2017 | US | 9723144 | B1 | 01-08-2017 |
| | | | | US | 9807235 | B1 | 31-10-2017 |
| US 2007150424 | A1 | | 28-06-2007 | NONE | | | |
| US 2019166144 | A1 | | 30-05-2019 | NONE | | | |

EPO FORM P0459

For more details about this annex : see Official Journal of the European Patent Office, No. 12/82